# EUROPEAN PATENT SPECIFICATION

(11) **EP 3 597 675 B1**
(45) Date of publication and mention of the grant of the patent: **27.04.2022**
(21) Application number: 18788317.8
(22) Date of filing: 11.04.2018
(51) Int. Cl.: C08F 214/18, C08F 216/12, C08F 218/04, C08F 220/18, C08F 230/08, C08F 290/06, C09D 127/12, C08F 214/20, C08F 214/26, C09D 127/16, C09D 127/18

(54) **FLUORINE-CONTAINING COPOLYMER**
FLUORHALTIGES COPOLYMER
COPOLYMÈRE CONTENANT DU FLUOR

(30) Priority: 17.04.2017 JP 2017081202
(43) Date of publication of application: 22.01.2020
(73) Proprietor: Kanto Denka Kogyo Co., Ltd., Tokyo 100-0005 (JP)
(72) Inventor: FUKADA, Takumi, Shibukawa-shi Gunma 377-8513 (JP); MATSUDA, Yoshitaka, Shibukawa-shi Gunma 377-8513 (JP); HIKOBE, Yoshimasa, Shibukawa-shi Gunma 377-8513 (JP)
(74) Representative: Gille Hrabal Partnerschaftsgesellschaft mbB Patentanwälte
(86) International application number: PCT/JP2018/015167
(87) International publication number: WO 2018/193926

(56) References cited:
- WO-A1-2004/044019
- WO-A1-2016/152631
- WO-A1-2016/152631
- JP-A- 2000 313 725
- JP-A- 2001 163 927
- JP-A- 2001 206 918
- JP-A- 2001 207 004
- JP-A- 2002 309 054
- JP-A- 2004 115 792
- JP-A- 2008 024 874
- JP-A- 2014 072 434
- JP-A- 2014 213 490
- JP-A- 2014 213 576

## Description

### Field of the Invention

The present invention relates to a coating composition, a method for producing a coating composition, a coated article, and a method for forming a coating film.

### Background of the Invention

Conventionally, a paint or a paint composition that contains a fluorine-containing resin dissolved in an organic solvent as a main component has been applied to various applications which are exposed outdoors for a long period of time, exposed to direct sunlight, and affected by various harmful effects such as acid rain and bird droppings, detergents and sunscreen creams, including, for example, films of which the base substance is mainly a resin, such as automotive exterior films, automotive paint protection films, window films and marking films, and further various building materials and articles which are used indoors and outdoors, so as to impart weather resistance and chemical resistance to the various applications. In particular, a fluorine-containing copolymer that has a dimethylsiloxane structure in a side chain or a main chain skeleton not only imparts the weather resistance and the chemical resistance, but also can impart excellent stain resistance, water and oil repellency, slipperiness and the like, and accordingly has been effectively used in a wide range, but it has been desired to improve its scratch resistance.

Conventionally, as for a paint composition which contains a fluorine-containing copolymer that imparts a self-repairing property against a scratch, JP-A 5-105840 discloses a composition for paint, which contains: a) a fluorine-containing copolymer that contains 5 to 50 mol% of a unit based on a hydroxyl group-containing long chain alkyl vinyl ether represented by CH₂=CRO(CH₂)ₙOH (R is H or CH₃, and n is an integer of 7 to 18), and 30 to 70 mol% of a unit based on fluoroolefin, and has a glass transition temperature of -30 to +50°C, a hydroxyl value of 50 to 160 mgKOH/g, an acid value of 0 to 30 mgKOH/g and a number average molecular weight of 4,000 to 40,000; b) a curing agent having a functional group which can react with a hydroxyl group as essential components, wherein component a) is 50 to 95 wt% and component b) is 5 to 50 wt% with respect to the total of component a) and component b).

In addition, JP-A 2013-177535 discloses a solvent soluble fluorine-containing copolymer including polymerization unit (a) based on a fluorine-containing monomer, polymerization unit (b) based on a vinyl ether or a vinyl ester (however, excluding those having a hydroxyl group and a carboxyl group) which gives a homopolymer of which the glass transition temperature is 25°C or lower, polymerization unit (c) based on a monomer having a hydroxyl group (however, excluding the monomer having a carboxyl group), and polymerization unit (d) based on a monomer having a carboxyl group (however, excluding the monomer having the hydroxyl group); and includes 8.0 to 40.0 mol% of polymerization unit (b) with respect to the total polymerization units; and a composition for paint using the same, as a fluorine-containing copolymer which can form a coating film excellent in the self-repairing property against the scratch and a composition for paint using the same.

Furthermore, in a self-repairing type forming coating composition which does not use the fluorine-containing copolymer, as a self-repairing type forming coating composition which achieves both of the self-repairing property against the scratch of a coating film and durability, is further excellent in water resistance, stain resistance and weather resistance, and is excellent in the self-repairing property, particularly, in a thin film of less than 20 µm, JP-A 2012-107101 discloses a self-repairing type forming coating composition that is formed of acrylic resin (A), polyisocyanate (B) and additive (C), wherein a glass transition point of the above described acrylic resin (A) is -20 to 30°C, and a hydroxyl value per acrylic resin solid content is 40 to 100 mg KOH/g; the above described polyisocyanate (B) is an allophanate group-containing polyisocyanate which is obtained by a reaction of aliphatic organic diisocyanate (b1) with polycarbonate diol (b2) having a number average molecular weight of 250 to 750, and has an average functional group number of 4 to 6; and the above described additive (C) is a modified polydimethylsiloxane having at least one hydroxyl group.

In addition, WO-A 2016/152631 discloses a coating protective film that includes: (a) a coating layer which is formed using a silicon-containing fluorine resin and an isocyanate-based crosslinking agent; (b) a urethane layer; and (c) an adhesive layer.

In addition, JP-A 2000-313725 and JP-A 2001-163927 disclose fluorine-containing copolymers each containing a fluoroolefin and a predetermined organic silicon compound as a polymerization unit at a predetermined ratio. Additionally,it is known from JP-A-2014-072434 and JP-A-2014-072435 that allophanate modified bodies of polyvalent isocyanates are curing agents for coating comprising fluoropolymers. Document WO 2004 / 044019 A discloses coating compositions which are (partly) very similar to the ones of the current invention. However, the coating compositions disclosed in this document deviate (at least) with regards to the curing agent used.

### Summary of the Invention

The conventional fluorine-containing copolymer that imparts the self-repairing property is excellent in the weather resistance, the chemical resistance and the scratch resistance, but does not have the high stain resistance, the water and oil repellency, and the slipperiness which are observed in a fluorine-containing copolymer having a dimethylsiloxane structure in a side chain or main chain skeleton, and accordingly it has been difficult to be applied to the applications to which such characteristics are required. In addition, a self-repairing paint composition which has a polydimethylsiloxane structure but does not have a fluorine-containing copolymer exhibits high slipperiness, but there has been such a problem that a paint composition having the self-repairing property is inferior in the weather resistance and the chemical resistance as compared with a paint composition which contains the fluorine-containing copolymer.

The present invention provides a coating composition comprising a fluorine-containing copolymer that can form a coating film which is excellent in coating film characteristics such as chemical resistance, weather resistance, water and oil repellency, stain resistance, a repeated stain removability and slipperiness, and is further excellent in a self-repairing property against a scratch; and a coating composition, a coated article, and a method for forming a coating film, which use the fluorine-containing copolymer.

In the present invention, a conventionally used dimethyl silicone-containing fluorine copolymer is introduced as to lower a glass transition temperature to room temperature or lower, without remarkably lowering the weather resistance and the chemical resistance which are original functions of the fluorine resin.

Specifically, the present invention relates to a coating composition, comprising the following fluorine-containing copolymer and a curing agent for the fluorine-containing copolymer, wherein the curing agent is an allophanate modified body of a polyvalent isocyanate compound of the following formula (II) 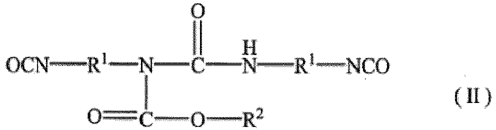 wherein in formula (II) R¹ is an alkylene group having 5 or 6 carbons, or an isophorone group, and R² is an aliphatic or alicyclic saturated hydrocarbon group having 1 to 20 carbons, which may have a branch;

### <fluorine-containing copolymer>

the fluorine-containing copolymer comprising:
(A) a fluoroolefin in an amount of 15 to 85 mol% of all constituent monomers;
(B) one or more organosilicon compounds selected from compounds represented by the following general formula (1) and compounds represented by the following general formula (2), in an amount of 0.001 to 10 mol% of all the constituent monomers;
(C) one or more monomers selected from vinyl ethers, vinyl esters, methacrylic esters and acrylic esters, the one or more monomers not having a curing reactive group and having an aliphatic saturated hydrocarbon group with 1 to 20 carbons, and a glass transition temperature of a homopolymer of the monomer being lower than 0°C, in an amount of 5 to 40 mol% of all the constituent monomers; and
(D) one or more monomers [hereinafter referred to as a monomer (D)] selected from vinyl ethers, vinyl esters, allyl ethers, methacrylic esters and acrylic esters, and having a curing reactive group, in an amount of 1 to 25 mol% of all the constituent monomers, wherein the fluorine-containing copolymer has
a glass transition temperature of -30°C to 20°C,
a number average molecular weight of 2.0×10⁴ to 7.0×10⁴, and
a weight average molecular weight of 1.0×10⁵ to 3.0×10⁵, 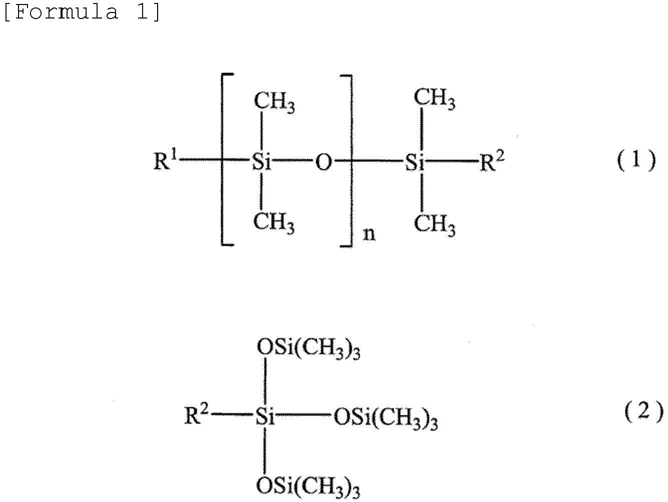
wherein R¹ represents an alkyl group having 1 to 6 carbons, -(CH₂)ᵣ-OOC(CH₃)C=CH₂, -(CH₂)ᵣ-OOC-HC=CH₂ or - CH=CH₂, R² represents -(CH₂)ᵣ-OOC(CH₃)C=CH₂, -(CH₂)ᵣ-OOC-HC=CH₂ or -CH=CH₂, n represents a number of 1 to 420, and r represents a number of 1 to 6,
wherein the glass transition temperature is determined with a differential scanning calorimeter, and the number average molecular weight and the weight average molecular weight are determined by gel permeation chromatography.

A method for producing the above described fluorine-containing copolymer which is comprised in the coating of the present invention, includes reacting (A) in an amount of 15 to 85 mol% of the monomers used for the reaction, (B) in an amount of 0.001 to 10 mol% of the monomers used for the reaction, (C) in an amount of 5 to 40 mol% of the monomers used for the reaction, and (D) in an amount of 1 to 25 mol% of the monomers used for the reaction.

In addition, the present invention relates to a method for producing the coating composition of the present invention, including mixing the above described fluorine-containing copolymer with the above described curing agent.

In addition, the present invention relates to a coated article including: a substrate; and a cured film of the above described coating composition of the present invention formed on the substrate.

In addition, the present invention relates to a method for forming a cured film, including applying the above described coating composition of the present invention to a substrate to form a coating film, and curing the coating film to form a cured film.

The present invention discloses a fluorine-containing copolymer (the copolymer is not an object of the invention) that can form a coating film which is excellent not only in coating film characteristics of the chemical resistance, the weather resistance, the water and oil repellency, the stain resistance, the repeated stain removability, the slipperiness but also in the self-repairing property against the scratch; and a coating composition, a coated article, and a method for forming a coating film, which use the fluorine-containing copolymer. The present invention can be suitably used for forming the coating film in a wide range of applications. The present invention can be used, for example, for an automotive exterior film, a marking film, a window film which are used outdoors over a long period of time. In addition, the present invention can be used for forming a coating film for a kitchen, a bathroom to which high water repellency, oil repellency, stain resistance and smooth touch feeling are required within doors. In addition, the present invention can be used for forming a coating film on housings of a home appliance, and an electronic device.

### Embodiments of the Invention

The details of the present invention are described below.

### [Fluorine-containing copolymer and method for producing the same]

The fluorine-containing copolymer which is comprised in the coating of the present invention contains a fluoroolefin which is monomer (A), in an amount of 15 to 85 mol% of all constituent monomers, as a polymerization unit.

In the fluorine-containing copolymer which is comprised in the coating of the present invention, when monomer (A) is 15 mol% or more of all the constituent monomers, a coating film formed from the fluorine-containing copolymer exhibits sufficient stain resistance. In addition, when monomer (A) is 85 mol% or less of all the constituent monomers, the solubility to various solvents of the fluorine-containing copolymer does not decrease, which is preferable. A ratio of the fluoroolefin is more preferably 30 to 80 mol% of all the constituent monomers.

The fluoroolefins of monomer (A) include olefins having one or more fluorine atoms in the molecule. For example, vinylidene fluoride, tetrafluoroethylene, chlorotrifluoroethylene, hexafluoropropylene are suitable. These fluoroolefins may be used each solely or in combination of two or more, and in particular, a combination of vinylidene fluoride and tetrafluoroethylene is preferable. The tetrafluoroethylene is preferable in such a point that the tetrafluoroethylene lowers a Tg of the fluorine-containing copolymer disclosed in the present invention (the copolymer is not according to the current invention), and a coating film using the fluorine-containing copolymer disclosed in the present invention expresses an effective self-repairing property at room temperature or higher. When vinylidene fluoride (VDF) is concomitantly used with the tetrafluoroethylene (TFE), a mass ratio between both fluoroolefins is preferably 0.05/1 to 2.0/1 by VDF/TFE, and is more preferably 0.1/1 to 1.5/1.

The fluorine-containing copolymer which is comprised in the coating of the present invention contains, as the polymerization unit, one or more organosilicon compounds that are monomers (B) and are selected from compounds represented by the following general formula (1) and compounds represented by the following general formula (2), in an amount of 0.001 to 10 mol%, preferably of 0.005 to 5 mol%, more preferably of 0.005 to 3 mol%, further preferably of 0.005 to 2 mol%, furthermore preferably of 0.008 to 2 mol%, furthermore preferably of 0.01 to 2 mol%, furthermore preferably of 0.01 to 1 mol%, and furthermore preferably of 0.05 to 1 mol%, of all constituent monomers. 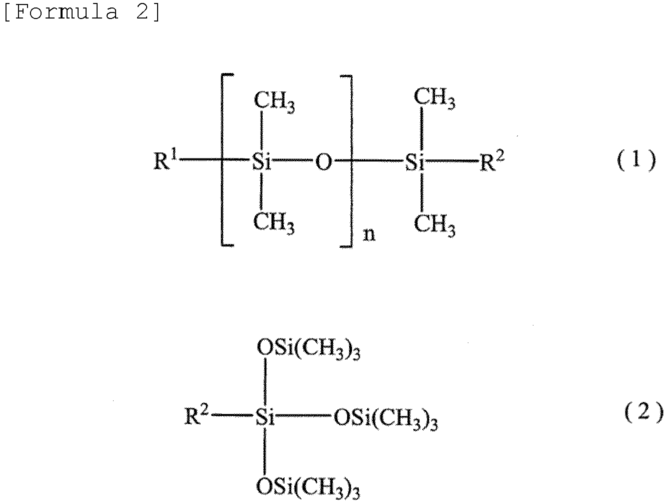 wherein R¹ represents an alkyl group having 1 to 6 carbons, -(CH₂)ᵣ -OOC(CH₃)C=CH₂, -(CH₂)ᵣ-OOC-HC=CH₂ or - CH=CH₂, R² represents -(CH₂)ᵣ-OOC(CH₃)C=CH₂, -(CH₂)ᵣ-OOC-HC=CH₂ or -CH=CH₂, n represents a number of 1 to 420, and r represents a number of 1 to 6.

In the fluorine-containing copolymer which is comprised in the coating of the present invention, when monomer (B) is 0.001 mol% or more of all the constituent monomers, the coating film formed from the fluorine-containing copolymer provides sufficient water and oil repellency, antifouling property, slipperiness, and an effect of relieving a scratch based on the slipperiness, over a long period of time. In addition, when monomer (B) is 10 mol% or less of all the constituent monomers, the coating film formed from the fluorine-containing copolymer provides sufficient chemical resistance, weather resistance and self-repairing property. In addition, when a compound is used which has a large molecular weight among monomers (B), for example, as in such a monomer that the n in general formula (1) is 200 to 400, a ratio of the monomer is preferably 0.005 to 5 mol% of all the constituent monomers, from the viewpoint of easiness of polymerization.

Furthermore, monomer (B) is preferably polydimethylsiloxane in which one end is methacryl-modified, polydimethylsiloxane in which one end is acrylic-modified, polydimethylsiloxane in which both ends are methacryl-modified. These reactive silicone oils may be used each solely or in combination of two or more. The number average molecular weight of these reactive silicone oils is preferably 200 to 30,000.

Monomer (B) is preferably polydimethylsiloxane in which one end is methacryl-modified, polydimethylsiloxane in which one end is acrylic-modified, polydimethylsiloxane in which both ends are methacryl-modified. The organosilicon compounds represented by general formula (1) or (2) may be used each solely or in combination of two or more.

The number average molecular weight of the organosilicon compound represented by general formula (1) or (2) is preferably 200 to 30,000.

Monomers (B) include at least one organosilicon compound which is selected from compounds represented by following Formulae (3), (4), (5) and (6).

CH₂=C(CH₃)-COO-C₃H₆-Si(CH₃)₂-[O-Si(CH₃)₂]m-R³ ...... (3)

(Here, R³ represents an alkyl group having 1 to 6 carbons, and m represents 1 to 250 and preferably 5 to 200.)

CH₂=CH-COO-C₃H₆-Si(CH₃)₂-[O-Si(CH₃)₂]ₚ-R⁴ ...... (4)

(Here, R⁴ represents an alkyl group having 1 to 6 carbons, p represents 1 to 250 and preferably 5 to 200.)

R⁵-C₃H₆-Si(CH₃)₂-[O-Si(CH₃)₂]_{q}-C₃H₆-R⁵ ...... (5)

(Here, R⁵ represents -OOC(CH₃)C=CH₂, and q represents 1 to 250 and preferably 5 to 200.)

CH₂=C(CH₃)COO-C₃H₆Si[O-Si(CH₃)₃]₃ ...... (6)

The fluorine-containing copolymer which is comprised in the coating of the present invention includes one or more monomers as a polymerization unit, which are monomers (C) selected from vinyl ethers, vinyl esters, methacrylic esters and acrylic esters, the one or more monomers not having a curing reactive group and having an aliphatic saturated hydrocarbon group with 1 to 20 carbons, a Tg of a homopolymer of the monomer being lower than 0°C, in an amount of 5 to 40 mol% of all the constituent monomers. The aliphatic saturated hydrocarbon group that monomer (C) has may be linear or branched. Monomers (C) include a monomer which does not have any of a hydroxyl group and an epoxy group.

Monomer (C) has an effect of decreasing the Tg of the fluorine-containing copolymer which is comprised in the coating of the present invention, and contributes to a coating film using the fluorine-containing copolymer which is comprised in the coating of the present invention exhibiting an effective self-repairing property at room temperature or higher.

As the Tg of the homopolymer of monomer (C) is lower than 0°C, when monomer (C) is incorporated in the fluorine-containing copolymer which is comprised in the coatingof the present invention, an effective self-repairing property can be imparted to the coating film using the fluorine-containing copolymer. It is preferable that the Tg of the homopolymer of monomer (C) is, for example, -5°C or lower, in order that the coating film using the fluorine-containing copolymer exhibits the effective self-repairing property even at 0 to 2°C, which is an average temperature in winter in Japan. The Tg of the homopolymer of monomer (C) is a value which can be obtained by measurement with a differential scanning calorimeter (DSC). Specifically, the Tg is a value which has been measured by a similar method to that of a Tg of the fluorine-containing copolymer in Examples (though a temperature range in measurement is changed).

The vinyl ethers among monomers (C) specifically include methyl vinyl ether, ethyl vinyl ether, n-propyl vinyl ether, isopropyl vinyl ether, n-butyl vinyl ether, isobutyl vinyl ether, n-pentyl vinyl ether, isopentyl vinyl ether, tertiary pentyl vinyl ether, n-hexyl vinyl ether, isohexyl vinyl ether, 2-ethylhexyl vinyl ether, n-heptyl vinyl ether, n-octyl vinyl ether, n-nonyl vinyl ether, n-decyl vinyl ether, n-undecyl vinyl ether, n-dodecyl vinyl ether, n-tridecyl vinyl ether, n-tetradecyl vinyl ether, n-pentadecyl vinyl ether, n-hexadecyl vinyl ether, n-heptadecyl vinyl ether, n-octadecyl vinyl ether, n-nonadecyl vinyl ether and n-icosyl vinyl ether. The vinyl ether is preferably a vinyl ether which has an alkyl group having 1 to 20 carbons.

The vinyl esters among monomers (C) specifically include vinyl butyrate, vinyl caproate, vinyl caprylate, vinyl caprate, vinyl laurate, vinyl myristate, vinyl palmitate and vinyl stearate.

The methacrylic ester among monomers (C) specifically include n-hexyl methacrylate, 2-ethylhexyl methacrylate, n-heptyl methacrylate, n-octyl methacrylate, n-nonyl methacrylate, n-decyl methacrylate, n-undecyl methacrylate, n-dodecyl methacrylate, n-tridecyl methacrylate, n-tetradecyl methacrylate, n-pentadecyl methacrylate, n-hexadecyl methacrylate, n-heptadecyl methacrylate, n-octadecyl methacrylate, n-nonadecyl methacrylate and n-icosyl methacrylate.

The acrylic ester among monomers (C) specifically include ethyl acrylate, 2,2,2-trifluoroethyl acrylate, n-propyl acrylate, isopropyl acrylate, n-butyl acrylate, isobutyl acrylate, n-pentyl acrylate, isopentyl acrylate, n-hexyl acrylate, 2-ethylhexyl acrylate, n-heptyl acrylate, n-octyl acrylate, n-nonyl acrylate, n-decyl acrylate, n-undecyl acrylate and n-dodecyl acrylate.

Monomer (C) is preferably one or more monomers selected from vinyl ethers, the one or more monomers not having a curing reactive group and having an aliphatic saturated hydrocarbon group with 1 to 20 carbons, a glass transition temperature of a homopolymer of the monomer being lower than 0°C.

In the fluorine-containing copolymer which is comprised in the coating of the present invention, the proportion of monomer (C) is 5 to 40 mol% of all the constituent monomers. When the proportion of monomer (C) is 5 mol% or more of all the constituent monomers, the Tg of the fluorine-containing copolymer which is comprised in the coating of the present invention is effectively decreased, and it becomes easy for the coating film using the fluorine-containing copolymer to exhibit the self-repairing property. In addition, when the proportion of monomer (C) is 40 mol% or less of all the constituent monomers, the coating film using the fluorine-containing copolymer can provide the sufficient chemical resistance and weather resistance. The proportion of monomer (C) is preferably 5 to 35 mol% of all the constituent monomers from the similar viewpoint.

The fluorine-containing copolymer which is comprised in the coating of the present invention includes one or more monomers as a polymerization unit, which are monomers (D) selected from vinyl ethers, vinyl esters, allyl ethers, methacrylic esters and acrylic esters, the one or more monomers having a curing reactive group, in an amount of 1 to 25 mol% of all the constituent monomers.

The fluorine-containing copolymer which is comprised in the coating of the present invention is preferably a copolymer that has a curing reactive group such as a hydroxyl group or an epoxy group, and thereby becomes curable. The fluorine-containing copolymer which is comprised in the coating of the present invention becomes a curable fluorine-containing copolymer, by using a monomer having a hydroxyl group or an epoxy group, for example, as monomer (D). The fluorine-containing copolymer which is comprised in the coating of the present invention may be a thermosetting fluorine-containing copolymer.

Monomer (D) is preferably a monomer that has one or more hydroxyl groups or epoxy groups as a curing reactive group.

In addition, monomer (D) may be a monomer that has a group selected from an aliphatic saturated hydrocarbon group having 1 to 20 carbons, an alicyclic saturated hydrocarbon group having 1 to 20 carbons, and an alkylene glycol group in which the alkylene group has 1 to 20 carbons and the number of repeating units of the alkylene group is 1 to 10. Furthermore, monomer (D) may have a group that is selected from an aliphatic saturated hydrocarbon group having 1 to 10 carbons, an aliphatic hydrocarbon group having 1 to 10 carbons, which contains an alicyclic saturated hydrocarbon group having 1 to 10 carbons, and an alkylene glycol group in which the alkylene group has 1 to 6 carbons and the number of repeating units of the alkylene group is 1 to 10. The aliphatic saturated hydrocarbon group has preferably 2 to 9 and further preferably 4 to 6 carbons. The alicyclic saturated hydrocarbon group has preferably 3 to 8 carbons and further preferably has 5 to 7 carbons, and the aliphatic hydrocarbon containing the alicyclic saturated hydrocarbon in the structure has preferably 1 to 9 and further preferably 2 to 6 carbons. The alkylene group of the alkylene glycol group has preferably 1 to 4 and further preferably 2 to 3 carbons. In addition, the number of repeating units of the alkylene group is preferably 1 to 5 and is further preferably 2 to 3.

Specific examples of the vinyl ether among monomers (D) include glycidyl vinyl ether, glycidyloxymethyl vinyl ether, glycidyloxyethyl vinyl ether, glycidyloxybutyl vinyl ether, glycidyloxypentyl vinyl ether, glycidyloxycyclohexyl vinyl ether, hydroxymethyl vinyl ether, hydroxyethyl vinyl ether, hydroxypropyl vinyl ether, hydroxybutyl vinyl ether, hydroxypentyl vinyl ether, hydroxyhexyl vinyl ether, hydroxyheptyl vinyl ether, hydroxyoctyl vinyl ether, hydroxynonyl vinyl ether, hydroxydecyl vinyl ether, hydroxyundecyl vinyl ether, hydroxydodecyl vinyl ether, hydroxytridecyl vinyl ether, hydroxytetradecyl vinyl ether, hydroxypentadecyl vinyl ether, hydroxyhexadecyl vinyl ether, hydroxyheptadecyl vinyl ether, hydroxyoctadecyl vinyl ether, hydroxynonadecyl vinyl ether, hydroxyicosyl vinyl ether, 4-hydroxycyclohexyl vinyl ether, diethylene glycol monovinyl ether and triethylene glycol monovinyl ether. The vinyl ether of monomer (D) is preferably a vinyl ether that is substituted with a hydroxyl group and has an alkyl group having 1 to 20 carbons and preferably 1 to 6 carbons.

Specific examples of the vinyl esters among monomers (D) include glycidyl vinyl ester, glycidyloxymethyl vinyl ester, glycidyloxyethyl vinyl ester, glycidyloxybutyl vinyl ester, glycidyloxypentyl vinyl ester, glycidyloxycyclohexyl vinyl ester, hydroxymethyl vinyl ester, hydroxyethyl vinyl ester, hydroxypropyl vinyl ester, hydroxybutyl vinyl ester, hydroxypentyl vinyl ester, hydroxyhexyl vinyl ester, hydroxyheptyl vinyl ester, hydroxyoctyl vinyl ester, hydroxynonyl vinyl ester, hydroxydecyl vinyl ester, hydroxyundecyl vinyl ester, hydroxydodecyl vinyl ester, hydroxytridecyl vinyl ester, hydroxytetradecyl vinyl ester, hydroxypentadecyl vinyl ester, hydroxyhexadecyl vinyl ester, hydroxyheptadecyl vinyl ester, hydroxyoctadecyl vinyl ester, hydroxynonadecyl vinyl ester, hydroxyicosyl vinyl ester, 4-hydroxycyclohexyl vinyl ester, diethylene glycol monovinyl ester and triethylene glycol monovinyl ester.

Specific examples of the allyl ethers among monomers (D) include allyl glycidyl ether, 3-allyloxy-1, 2-propanediol, glycerol-α-monoallyl ether and ethylene glycol monoallyl ether.

Specific examples of the methacrylic esters among monomers (D) include glycidyl methacrylate, 2-hydroxyethyl methacrylate, 3-hydroxypropyl methacrylate, 4-hydroxybutyl methacrylate and 2-hydroxypropyl methacrylate.

Specific examples of the acrylic esters among monomers (D) include 2-hydroxyethyl acrylate and 2-hydroxybutyl acrylate.

Monomer (D) is preferably one or more monomers selected from vinyl ethers, and having a curing reactive group.

In the fluorine-containing copolymer which is comprised in the coating of the present invention, the proportion of monomer (D) is 1 to 25 mol% of all the constituent monomers. When the proportion of monomer (D) is 1 mol% or more of all the constituent monomers, the fluorine-containing copolymer can provide adequate curing reactivity. In addition, when the proportion of monomer (D) is 25 mol% or less of all the constituent monomers, the coating film using the fluorine-containing copolymer can provide the sufficient chemical resistance, weather resistance, stain resistance and self-repairing property. The proportion of monomer (D) is preferably 3 to 20 mol% of all the constituent monomers from the similar viewpoint. More preferably, the proportion is 5 to 18 mol%.

The fluorine-containing copolymer which is comprised in the coating of the present invention can include a monomer other than monomers (A) to (D) (hereinafter referred to as monomer (E)) as a polymerization unit, in such a range as not to impair the effects of the present invention.

Examples of monomers (E) include: other vinyl ethers such as cyclohexyl vinyl ether and 2-(perfluorohexyl) ethyl vinyl ether;
other allyl ethers such as ethyl allyl ether, butyl allyl ether, cyclohexyl allyl ether, isobutyl allyl ether and n-propyl allyl ether;
other methacrylic esters such as methyl methacrylate, ethyl methacrylate, n-butyl methacrylate, t-butyl methacrylate, cyclohexyl methacrylate, dicyclopentanyl methacrylate, 2-(perfluorobutyl)ethyl methacrylate and 2-(perfluorohexyl)ethyl methacrylate; and
other acrylic esters such as methyl acrylate, ethyl acrylate, t-butyl acrylate, 2-(perfluorobutyl)ethyl acrylate and 2-(perfluorohexyl)ethyl acrylate.

In addition, examples of monomers (E) include: olefins such as ethylene and propylene; and haloolefins such as vinyl chloride and vinylidene chloride.

In the fluorine-containing copolymer which is comprised in the coating of the present invention, it is preferable for the proportion of monomers (E) to be less than 20 mol% of all the constituent monomers, and is further preferable to be 15 mol% or less.

In the fluorine-containing copolymer which is comprised in the coating of the present invention, the total proportion of monomers (A) to (D) is preferably 80 mol% or more, further preferably 85 mol% or more, and 100 mol% or less, or may be 100 mol%, of all the constituent monomers.

The fluorine-containing copolymer which is comprised in the coating of the present invention can be produced by reacting monomer (A) in an amount of 15 to 85 mol% of the monomers used for the reaction, monomer (B) in an amount of 0.001 to 10 mol% of the monomers used for the reaction, monomer (C) in an amount of 5 to 40 mol% of the monomers used for the reaction, and monomer (D) in an amount of 1 to 25 mol% of the monomers used for the reaction. These preferable values of mol% are the same as those of mol% of all the constituent monomers.

The fluorine-containing copolymer which is comprised in the coating of the present invention can be produced, for example, by a copolymerization of a mixture of predetermined ratios of the monomers using a polymerization initiator. As for the polymerization initiator, a water-soluble initiator or an oil-soluble initiator is appropriately used, according to a type of solvent which is used according to a type of polymerization and a request. Examples of the oil-soluble initiators to be used include: peroxyester type peroxides such as t-butyl peroxyisobutyrate, t-butyl peroxyacetate and t-butyl peroxypivalate; dialkyl peroxydicarbonates such as diisopropyl peroxydicarbonate and dinormalpropyl peroxydicarbonate; and benzoyl peroxide and azobisisobutyronitrile. Examples of the water-soluble initiators to be used include: persulfates such as a potassium persulfate; hydrogen peroxide; or redox initiators such as a combination of these with a reducing agent such as sodium bisulfite and sodium thiosulfate; furthermore, inorganic initiators in which a small amount of iron, a ferrous salt, silver nitrate are allowed to coexist with these; and organic initiators of dibasic acid salts such as succinic acid peroxide, diglutaric acid peroxide and monosuccinic acid peroxide. The amount of these polymerization initiators to be used is appropriately selected according to the type thereof, copolymerization reaction conditions but is usually in a range of 0.005 to 5 mass% and preferably of 0.1 to 2 mass% with respect to the total amount of the monomers to be used.

There is no particular limitation on a polymerization method, and for example, a bulk polymerization method, a suspension polymerization method, an emulsion polymerization method, a solution polymerization method can be used. However, preferable methods are a solution polymerization method which uses ketones such as methyl ethyl ketone, carboxylic acid esters such as butyl acetate, aliphatic saturated hydrocarbons such as hexane, aromatic hydrocarbons such as xylene, alcohols such as isopropyl alcohol, saturated halogenated hydrocarbons having one or more fluorine atoms, as a solvent; and an emulsion polymerization method in an aqueous solvent. Furthermore, preferable solvents for obtaining the fluorine-containing copolymer by the solution polymerization method include solvents selected from ethyl acetate, butyl acetate, hexane, cyclohexane, heptane, xylene, toluene, isopropyl alcohol and methyl ethyl ketone.

In the case of copolymerization in an aqueous solvent (emulsion polymerization method and suspension polymerization method), it is desirable to use a suspending agent or an emulsifying agent usually as a dispersing agent, add a basic buffer and adjust the pH of the reaction liquid during polymerization to 4 or higher and preferably 6 or higher.

A reaction temperature in these copolymerization reactions is appropriately selected ordinarily in a range of -30°C to 150°C according to the type of a polymerization medium for the polymerization initiator. For example, when the copolymerization is performed in a solvent, it is usually in a range of 0°C to 100°C and preferably of 10°C to 90°C. Incidentally, the reaction temperature shall refer to the maximum temperature during the reaction. A reaction pressure is not limited in particular, but is usually selected in a range of 0.1 to 10 MPa and preferably of 0.1 to 5 MPa.

Furthermore, the copolymerization reaction can be performed by the addition of a suitable chain transfer agent.

In the case where an acidic substance such as hydrogen fluoride becomes detached from the monomer or polymer during polymerization, the polymerization solution becomes acidic, and the solution containing the polymer becomes thickened or gelled during storage, or when a curing catalyst is used for the curing reaction between a polymer and a polyvalent isocyanate copolymer, and these acidic substances inhibit or accelerate a catalytic reaction, it is acceptable to add organic amines such as dimethylamine, diethylamine, dipropylamine, diisopropylamine, dibutylamine, diisobutylamine, dipentylamine, diisopentylamine, dihexylamine, diheptylamine, dioctylamine, trimethylamine, triethylamine, tripropylamine, triisopropylamine, tributylamine, triisobutylamine, tripentylamine, triisopentylamine, trihexylamine, triheptylamine, trioctylamine, diazabicycloundecene and 1,4-diazabicyclo[2.2.2]octane; ion exchange resins such as a basic anion exchange resin; alkali metal salts or alkaline-earth metal salts such as sodium hydrogen carbonate, sodium carbonate, potassium hydrogen carbonate, potassium carbonate and sodium phosphate; metal oxides such as alumina, zirconia and titania; and zeolites such as molecular sieves; and to neutralize an acidic substance such as hydrogen fluoride. The timing of addition may be any of the occasions before polymerization, during polymerization and after polymerization, and may be divided into two or more times.

One example of methods for producing the fluorine-containing copolymer which is comprised in the coating of the present invention is a method of reacting monomer (A) in an amount of 15 to 85 mol% of the monomers used for the reaction, monomer (B) in an amount of 0.001 to 10 mol% of the monomers used for the reaction, monomer (C) in an amount of 5 to 40 mol% of the monomers used for the reaction and monomer (D) in an amount of 1 to 25 mol% of the monomers used for the reaction, in the presence of a peroxyester type peroxide, and in a solvent selected from ethyl acetate, butyl acetate, hexane, a cyclohexane, a heptane, xylene, toluene, isopropyl alcohol and methyl ethyl ketone, at a reaction pressure of 0.1 to 5 MPa and a reaction temperature of 10 to 90°C.

The fluorine-containing copolymer which is comprised in the coating of the present invention has a number average molecular weight of 2.0×10⁴ to 7.0×10⁴. This number average molecular weight is preferably 2.5×10⁴ to 6.9×10⁴, and more preferably 2.7×10⁴ to 6.8×10⁴.

In addition, the fluorine-containing copolymer which is comprised in the coating of the present invention has a weight average molecular weight of 1.0×10⁵ to 3.0×10⁵. This weight average molecular weight is preferably 1.5×10⁵ to 2.7×10⁵, and more preferably 1.6×10⁵ to 2.5×10⁵.

When the number average molecular weight of the fluorine-containing copolymer is 2.0×10⁴ or more and the weight average molecular weight is 1.0×10⁵ or more, the leveling of the coating composition which contains the fluorine-containing copolymer is adequate, and a smooth coating film can be obtained. At the same time, the strength of the coating film is also high, and a valid self-repairing property can be obtained. In addition, when the number average molecular weight of the fluorine-containing copolymer is 7.0×10⁴ or less and the weight average molecular weight is 3.0×10⁵ or less, the viscosity of the coating composition which contains the fluorine-containing copolymer becomes appropriate, and a handling property becomes also adequate.

Here, the number average molecular weight and the weight average molecular weight of the fluorine-containing copolymer are each measured by gel permeation chromatography under the following conditions.
Measuring device: HLC-8320 GPC (Tosoh Corporation)
Column: TD gel Super HZM-M (Tosoh Corporation)
Detector: RI (differential refractometer attached to the device)
Standard substance: polystyrene
Data processing: EcoSEC-WS (Tosoh Corporation)
Measurement conditions: column temperature (40°C), solvent (tetrahydrofuran), flow rate (0.35 mL/min), sample concentration (0.14 wt%), and amount of sample to be injected (20 µL)

The fluorine-containing copolymer which is comprised in the coating of the present invention has a Tg of -30°C to 20°C. The Tg is preferably -25°C to 15°C, and more preferably -20°C to 12°C. When the Tg is -30°C or higher, the toughness and chemical resistance of the coating film which uses the fluorine-containing copolymer become adequate. In addition, when the Tg is 20°C or lower, the effective self-repairing property at room temperature of the coating film which uses the fluorine-containing copolymer can be obtained. The Tg of the fluorine-containing copolymer is a value which can be obtained by measurement with a differential scanning calorimeter (DSC). Specifically, the Tg is a value which has been measured by a method in Examples.

### [Coating composition and method for producing the same]

The present invention provides a coating composition, which contains the fluorine-containing copolymer which is comprised in the coating of the present invention and a curing agent for the fluorine-containing copolymer, wherein the curing agent is an allophanate modified body of a polyvalent isocyanate compound of the following formula (II) 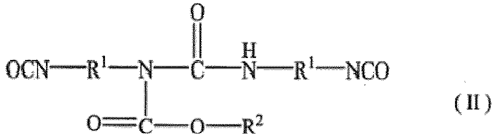 wherein in formula (II) R¹ is an alkylene group having 5 or 6 carbons, or an isophorone group, and R² is an aliphatic or alicyclic saturated hydrocarbon group having 1 to 20 carbons, which may have a branch. For example, a coating film excellent in the self-repairing property can be obtained, by a process of preparing a varnish or a paint composition using the fluorine-containing copolymer which is comprised in the coating of the present invention, and forming a coating film using them. It is preferable that the fluorine-containing copolymer which is used for the coating composition of the present invention is a copolymer having a curing reactive group such as a hydroxyl group or an epoxy group.

The content of the fluorine-containing copolymer in the coating composition of the present invention can be appropriately determined in consideration of the application or the object. For example, the coating composition of the present invention preferably contains the fluorine-containing copolymer of the present invention in an amount of 0.5 to 90 mass% and more preferably 1 to 80 mass%.

The coating composition of the present invention contains the curing agent for the fluorine-containing copolymer of the present invention (hereinafter referred to as the curing agent of the present invention). The curing agent of the present invention is the allophanate modified body of a polyvalent isocyanate compound of the following formula (II) 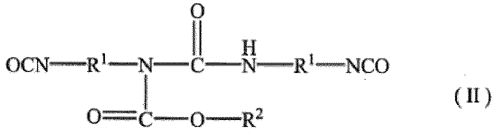 wherein in formula (II) R¹ is an alkylene group having 5 or 6 carbons, or an isophorone group, and R² is an aliphatic or alicyclic saturated hydrocarbon group having 1 to 20 carbons, which may have a branch, from the viewpoint of the self-repairing property of the coating film. The curing agent of the present invention preferably has three or more functional groups. The curing agent of the present invention preferably has three or more NCO groups, and further three or more and five or less NCO groups.

Examples of the adduct modified bodies of the polyvalent isocyanate (such adduct modified bodies of the polyvalent isocyanate are not according to the current invention) include adducts of a polyvalent isocyanate and a polyvalent alcohol. The adduct modified body of the polyvalent isocyanate preferably has three or more functional groups. The adduct modified body of the polyvalent isocyanate preferably has three or more NCO groups, and more preferably three or more and five or less NCO groups. Specifically, examples of the adduct modified body include adducts of a diisocyanate with a polyhydric alcohol having 3 to 30 carbons, and further adducts of a diisocyanate with trimethylolpropane. More specifically, the adduct modified bodies include adducts of compounds selected from hexamethylene diisocyanate, pentamethylene diisocyanate and isophorone diisocyanate, with trimethylolpropane. An example of the adduct modified bodies of the polyhydric isocyanate includes a compound having a structure shown in the following formula (I). Another compound than the compound of formula (I) can be used as a curing agent of the present invention, as long as the compound is a polyisocyanate modified body which contains a structure classified as an adduct modified body.

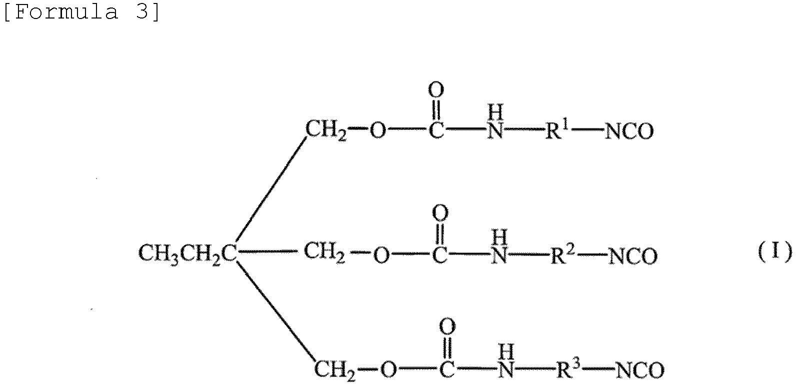

In the formula, R¹ to R³ each independently represent an alkylene group having 5 or 6 carbons or an isophorone group.

In addition, as the allophanate modified body of the polyvalent isocyanate, an adduct of the polyvalent isocyanate with a monohydric alcohol is exemplified. Examples others than the allophanate modified body of a polyvalent isocyanate compound of the following formula (II) 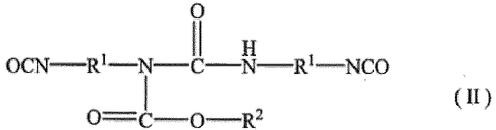 wherein in formula (II) R¹ is an alkylene group having 5 or 6 carbons, or an isophorone group, and R² is an aliphatic or alicyclic saturated hydrocarbon group having 1 to 20 carbons, which may have a branch are not according to the current invention.

The allophanate modified body of the polyvalent isocyanate preferably has three or more functional groups. The allophanate modified body of the polyvalent isocyanate preferably has three or more NCO groups, and further three or more and five or less NCO groups. Specifically, examples of the allophanate modified bodies include an adduct of a diisocyanate with a monohydric alcohol, and further an adduct of a diisocyanate with a monohydric alcohol having 1 to 20 carbons. More specifically, exemplified is an adduct of a compound selected from hexamethylene diisocyanate, pentamethylene diisocyanate and isophorone diisocyanate, with a monohydric alcohol that contains an aliphatic or alicyclic saturated hydrocarbon group having 1 to 20 carbons, which may have a branch. The allophanate modified bodies of the polyvalent isocyanate is a compound having a structure represented by the following formula (II). Other compounds than those of formula (II) are not according to the current invention.

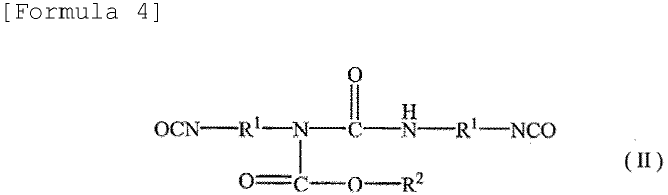

In the formula, R¹ is an alkylene group having 5 or 6 carbons, or an isophorone group, and R² is an aliphatic or alicyclic saturated hydrocarbon group having 1 to 20 carbons, which may have a branch.

The coating composition of the present invention can contain a curing agent (hereinafter referred to as other curing agents) other than the curing agent of the present invention, in such a range as not to impair the effects of the present invention.

Other usable curing agents include a compound which is a polyvalent isocyanate compound or a modified body of a polyvalent isocyanate compound and does not correspond to the curing agent of the present invention.

In addition, a melamine curing agent, a urea resin curing agent, a polybasic acid curing agent can also be used as the other curing agents. Examples of the melamine curing agent include butylated melamine, methylated melamine and epoxy-modified melamine. Curing agents having various degrees of modification are appropriately used according to the application, and a degree of self-condensation can also be selected appropriately. Examples of the urea resin curing agent include a methylated urea resin and a butylated urea resin. Examples of a curing agent of a polybasic acid include long-chain aliphatic dicarboxylic acids, aromatic polyvalent carboxylic acids, and acid anhydrides thereof.

Furthermore, blocked polyisocyanates can also be used as other curing agents. In addition, when the melamine curing agent or the urea resin curing agent is used, the curing can be also accelerated by an addition of an acidic catalyst.

When the fluorine-containing copolymer which is comprised in the coating of the present invention contains an epoxy group in a curing site, curing agents that are used for ordinary curable epoxy paints can be used, which are, for example, aliphatic amines such as diethylene triamine, triethylene tetramine and tetraethylene pentamine, or modified bodies thereof; aromatic amines such as m-phenylene diamine, p-p'-diaminodiphenyl methane and diaminophenyl sulfone, or modified bodies thereof; and polyvalent carboxylic acids such as phthalic anhydride, maleic anhydride, oxalic anhydride, hexahydrophthalic acid and pimelic acid, or anhydrides thereof.

For the coating composition of the present invention, such a combination is preferable that the fluorine-containing copolymer is a fluorine-containing copolymer which has a hydroxyl group as a curing reactive group, and the curing agent is a curing agent which is selected from an adduct modified body of a polyvalent isocyanate compound and an allophanate modified body of a polyvalent isocyanate compound. For the coating composition of the present invention, such a combination is more preferable that the fluorine-containing copolymer is a fluorine-containing copolymer which has the hydroxyl group as the curing reactive group, and the curing agent is a curing agent which is selected from a compound that is an adduct modified body of a polyvalent isocyanate compound and has three or more NCO groups and a compound that is an allophanate modified body of a polyvalent isocyanate compound and has three or more NCO groups. In these cases, an equivalent ratio between the hydroxyl group (OH) which the fluorine-containing copolymer has and the NCO group which the curing agent has is preferably 0.3 to 2.0, and more preferably 0.5 to 1.5, by NCO/OH.

The coating composition of the present invention contains preferably 1 to 300 parts by mass, more preferably 2 to 250 parts by mass, and further preferably 3 to 200 parts by mass of the curing agent of the present invention, with respect to 100 parts by mass of the fluorine-containing copolymer.

The coating composition of the present invention may contain other resins than the fluorine-containing copolymer which is comprised in the coating of the present invention. Examples of the other resins include an acrylic resin, a urethane resin, a silicone resin, a polyester resin, an alkyd resin, a melamine resin, an epoxy resin, a ketone resin, a polycarbonate resin, a polyolefin resin, a polyvinyl chloride resin, and a fluorine resin except the fluorine-containing copolymer which is comprised in the coating of the present invention. These other resins may be in any form of a powder, a varnish and a dispersion liquid.

When the coating composition of the present invention contains the above described other resins, the content is preferably 0.1 parts by mass to 500 parts by mass with respect to 100 parts by mass of the fluorine-containing copolymer which is comprised in the coating of the present invention, from such a viewpoint as not to impair the effects of the present invention. It is desirable that the Tgs of these other resins are also within the range of -30°C to 20°C.

The coating composition of the present invention may contain a solvent. The solvent is preferably a solvent which dissolves the fluorine-containing copolymer which is comprised in the coating of the present invention. The solvent is preferably an organic solvent. Examples of the organic solvents include an ester, a ketone, an alcohol and an aliphatic hydrocarbon. Specifically, the organic solvents include carboxylic acid esters such as ethyl acetate, propyl acetate, butyl acetate and amyl acetate; ketones such as methyl ethyl ketone and methyl isobutyl ketone; alcohols such as methyl alcohol, ethyl alcohol, isopropyl alcohol, methoxy propanol and ethoxy propanol; and alkanes such as n-pentane, i-pentane, n-hexane, i-hexane, cyclohexane, n-heptane, i-heptane and 2,2,4-trimethylpentane. In addition, organic solvents known as Solvesso (trade name) and mineral spirit can be also used. In addition, ethers such as methyl cellosolve and ethylene glycol monomethyl ether can also be used. In addition, aromatic hydrocarbons such as benzene, toluene and xylene can also be used. In addition, pyrrolidones such as N-methyl pyrrolidone can also be used. In addition, fluorine-based organic solvents such as Zeorora H (trade name), Novec 7200 (trade name) and Novec 7300 (trade name) can also be used. The above described organic solvents may be used solely or in combination of two or more.

Water may be used as the solvent, but in that case, it is preferable that the solvent also contains an organic solvent. When water is contained, a mass ratio of water/ (water + organic solvent) is preferably 0.01 to 10.

The coating composition of the present invention preferably contains 5 to 99 mass%, more preferably 10 to 98 mass%, and further preferably 20 to 95 mass% of the above described solvent, in the coating composition.

The coating composition of the present invention can contain a curing catalyst. Examples of the curing catalysts include known catalysts such as metal complexes containing a metal such as Sn, Zn, Zr, Ti, Bi, Al, Li and Ca, metal salts, amines, organic acids, acidic phosphoric esters,; and mixtures thereof.

The coating composition of the present invention can contain arbitrary components other than the fluorine-containing copolymer of the present invention, the curing agent, the solvent and the curing catalyst, in such a range as not to impair the effects of the present invention. Examples of the arbitrary components include a dispersion agent, a flatting agent, a plasticizer, a viscosity modifier, a defoaming agent, an anti-settling agent, a leveling agent, an antiseptic agent, an antibacterial agent, an antiviral agent, an antifungal agent, an antioxidant, an anti-oxidizing agent, a flame retardant, a light stabilizer, an ultraviolet absorber, a lubricant, an anti-freezing agent, a film-forming auxiliary agent, a color separation inhibitor, a pH adjuster, a surfactant, an anti-skinning agent, catalysts, a moisture absorbent, a pigment, a deodorant, a silane coupling agent, an antistatic agent, a water-repellent agent, an oil-repellent agent and a hydrophilizing agent.

The coating composition of the present invention can be produced by mixing the fluorine-containing copolymer which is comprised in the coating of the present invention with the curing agent which is comprised in the coating of the present invention. Preferably, the coating composition can be produced by mixing the fluorine-containing copolymer which is comprised in the coating of the present invention and the curing agent which is comprised in the coating of the present invention with a solvent. The order of mixing these components is not limited, but for example, after the fluorine-containing copolymer which is comprised in the coating of the present invention and the solvent have been mixed, the curing agent which is comprised in the coating of the present invention can be mixed thereinto.

When the coating composition of the present invention is produced using the solvent, the fluorine-containing copolymer which is comprised in the coating of the present invention and the curing agent which is comprised in the coating of the present invention can be mixed with the solvent, using various apparatuses such as a ball mill, a bead mill, a paint shaker, a sand mill, a triple roll mill and a kneader, which are used for producing an ordinary paint. At this time, it is also possible to add a pigment, a dispersion agent, a viscosity modifier, a leveling agent, an ultraviolet absorber as needed.

The coating composition of the present invention may be prepared by mixing the fluorine-containing copolymer which is comprised in the coating of the present invention with the curing agent which is comprised in the coating of the present invention, immediately before use. The present invention provides a kit for a coating composition, which contains a first composition that contains the fluorine-containing copolymer which is comprised in the coating of the present invention, and the curing agent for the above described fluorine-containing copolymer, wherein the curing agent contains a second composition which is the adduct modified body or the allophanate modified body of the polyisocyanate compound. The solvent and the arbitrary component can be appropriately blended in the first and second compositions. This kit is used so that the first composition and the second composition are mixed at the time of use, to prepare the coating composition of the present invention.

The coating composition of the present invention can be used as a varnish and a paint composition. In this case, known components can be appropriately blended to the compositions, respectively.

### [Coated article]

The present invention provides a coated article including: a substrate; and a cured film of the coating composition of the present invention formed on the substrate. To the coated article of the present invention, the matters can be appropriately applied which have been described in the fluorine-containing copolymer which is comprised in the coating of the present invention and the coating composition of the present invention.

As for applications of the coated article, the coated article can be used, in a wide range of applications, for example, as described in the following. Examples of exterior applications include exterior films for vehicles such as automotive exterior painting, an automotive exterior paint film, an automotive paint protection film, an automotive window film, and an automotive marking film. Specifically, examples thereof include exteriors and exterior components of automobiles such as a body, a bumper, a spoiler, a door knob, a head lamp, a blinker, a side mirror, a radiator grill and a wheel each of an automobile. In addition, examples thereof include motorcycle exteriors and exterior components such as a body, a steering wheel, a saddle and a gasoline tank each of a motorcycle. Other examples thereof include exteriors, exterior films and exterior components of vehicles such as trains. In addition, other examples thereof include a window film, a glass surface coating, a marking film, a protective film and painting each in vehicles such as an automobile, a motorcycle and a train. In addition, examples of interior applications in vehicles such as an automobile include: applications such as an interior sheet, a steering wheel, a meter panel, a control panel, a dashboard and a door interior each of an automobile; and a paint, a protective film and a design film in those applications.

Examples of other applications than those include: electronic devices such as a mobile phone, a smart phone, a personal computer, a television, a portable terminal (including game machine) and a printer; household appliances such as a television, an air conditioner, a microwave, a refrigerator, a washing machine, an air purifier, a vacuum cleaner and a ventilation fan; toys; interiors such as a shelf, a bookcase, a bed, a desk, a chair and a sofa; applications such as a ventilation fan, an oven hood, a kitchen panel, a stainless steel sink, a bathtub and a toilet; and a paint, a protective film and a designable film in those applications. In addition, examples of other applications include: a window film, a glass surface coating and an outdoor marking film each in buildings ; a protective film of various articles; and painting for a building material.

The present invention is not limited to the examples of the applications cited in the above description, and can be painted onto various articles.

Examples of the substrates include: inorganic substrates such as metals such as iron, stainless steel, aluminum and surface-treated products thereof, cement, lime, gypsum and ceramic; and organic resin materials such as resins of polyurethane, polyester, polyvinyl chloride, polyolefin, polycarbonate, ABS and acrylic. In addition, examples thereof include glass, wood and ceramics. A substratum of each of these substrates may be previously conditioned, for example, by a sealer, according to the type of the substrate. In addition, a coating film of each of various paints except the coating composition of the present invention may be formed on the surface of the substrates. The substrate which is used in the present invention is not limited to the substrates cited in the above description.

Examples of the substrates include a film-shaped substrate, a sheet-shaped substrate, and a molded body having another shape than those. The substrate may be any of a molded body which has been worked for a raw material and a molded body which has been worked for a product. Specifically, examples thereof include a polyurethane film, a vinyl chloride film, a PET film and an acrylic film. In addition, examples of the sheet-shaped substrates include a polyurethane sheet, a polyvinyl chloride sheet, a wet polyurethane synthetic leather sheet, a dry polyurethane synthetic leather sheet, a urethane rubber sheet and a vinyl chloride synthetic leather sheet. Examples of the above described molded bodies include an acrylic molded body, a polycarbonate molded body, an ABS molded body, an unsaturated polyester molded body and glasses, which may have an arbitrary shape. The shape of the substrate which is used in the present invention is not limited to the shapes of the substrates cited in the above description.

In the coated article of the present invention, the film thickness of the cured film is preferably 0.5 to 1000 µm, more preferably 1 to 1000 µm, further preferably 1 to 200 µm, and furthermore preferably 5 to 100 µm.

### [Method for forming cured film]

The present invention provides a method for forming a cured film, including applying the coating composition of the present invention to a substrate to form a coating film, and curing the coating film to form a cured film. To the method for forming a cured film of the present invention, the matters described in the fluorine-containing copolymer, the coating composition and the coated article of the present invention can be appropriately applied.

Specific examples of the substrate are the same as those of the coated article of the present invention, and preferred embodiments are also the same. The substrate may be any of a molded body which has been worked for a raw material and a molded body which has been worked for a product.

As for a method for applying the coating composition of the present invention to the substrate, known methods can be adopted according to the shape, material and the like of the substrate; and examples of the method include a gravure coater, a roll coater, a reverse roll coater, a comma coater, a doctor knife coater, a bar coater, a kiss roll coater, roller coating, spray coating, electrostatic spray coating, curtain coating, immersion coating, rotary screen printing, brushing. The amount of the coating composition applied and the thickness of the coating film can be appropriately determined in consideration of the target film thickness of the cured film, and on the basis of a composition of the coating composition.

In the present invention, the coating film formed on the substrate is cured by heating to preferably 30 to 250°C, and more preferably 40 to 150°C, if necessary.

The present invention also provides a method for producing a coated article, including applying the coating composition of the present invention to a substrate to form a coating film, and curing the coating film to form a cured film. To this method, the matters described in the fluorine-containing copolymer, the coating composition, the coated article, and the method for forming a cured film of the present invention can be appropriately applied.

### [Disclosure of the present specification]

The present specification discloses a use, as a coating composition, of a composition, which contains: a fluorine-containing copolymer including monomer (A) in an amount of 15 to 85 mol% of all constituent monomers, monomer (B) in an amount of 0.001 to 10 mol% of all the constituent monomers, monomer (C) in an amount of 5 to 40 mol% of all the constituent monomers, and monomer (D) in an amount of 1 to 25 mol% of all the constituent monomers, wherein a glass transition temperature is -30°C to 20°C, a number average molecular weight is 2.0×10⁴ to 7.0×10⁴, and a weight average molecular weight is 1.0×10⁵ to 3.0×10⁵; and
a curing agent for the fluorine-containing copolymer, wherein
the curing agent is an adduct modified body or an allophanate modified body of a polyvalent isocyanate compound.

The present specification discloses a composition for a coating agent, which contains: a fluorine-containing copolymer that includes monomer (A) in an amount of 15 to 85 mol% of all constituent monomers, monomer (B) in an amount of 0.001 to 10 mol% of all the constituent monomers, monomer (C) in an amount of 5 to 40 mol% of all the constituent monomers, and monomer (D) in an amount of 1 to 25 mol% of all the constituent monomers, wherein a glass transition temperature is -30°C to 20°C, a number average molecular weight is 2.0×10⁴ to 7.0×10⁴, and a weight average molecular weight is 1.0×10⁵ to 3.0×10⁵; and
a curing agent for the fluorine-containing copolymer, wherein
the curing agent is an adduct modified body or an allophanate modified body of a polyvalent isocyanate compound.

To these disclosures, the matters can be applied which have been described in the paint composition, the coated article and the method for producing a coated article of the present invention.

Preferred embodiments of the present invention will be described below.

A fluorine-containing copolymer which is comprised in the coating including: (A) a fluoroolefin in an amount of 15 to 85 mol% of all the constituent monomers;
(B) one or more organosilicon compounds selected from compounds represented by the following general formula (1) and compounds represented by the following general formula (2), in an amount of 0.001 to 10 mol% of all the constituent monomers;
(C) one or more monomers selected from vinyl ethers, vinyl esters, methacrylic esters and acrylic esters, the one or more monomers not having a curing reactive group and having an aliphatic saturated hydrocarbon group with 1 to 20 carbons, a glass transition temperature of a homopolymer of the monomer being lower than 0°C, in an amount of 5 to 40 mol% of all the constituent monomers; and
(D) one or more monomers [hereinafter referred to as monomer (D)] selected from vinyl ethers, vinyl esters, allyl ethers, methacrylic esters and acrylic esters, and having a curing reactive group, in an amount of 1 to 25 mol% of all the constituent monomers, wherein the fluorine-containing copolymer has
a glass transition temperature of -30°C to 20°C,
a number average molecular weight of 2.0×10⁴ to 7.0×10⁴, and
a weight average molecular weight of 1.0×10⁵ to 3.0×10⁵ 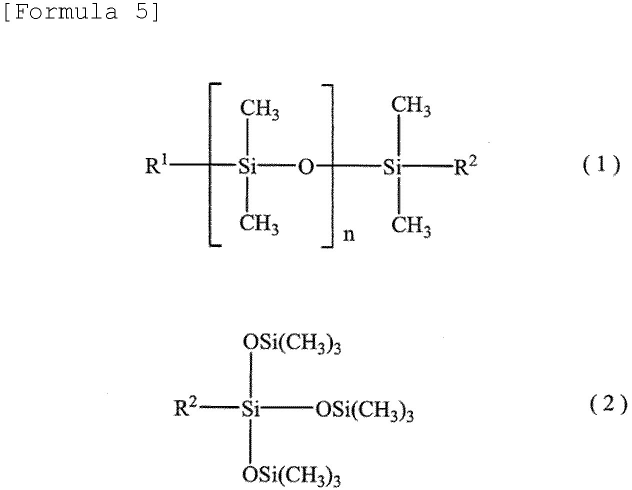
wherein R¹ represents an alkyl group having 1 to 6 carbons, -(CH₂)ᵣ -OOC(CH₃)C=CH₂, -(CH₂)ᵣ-OOC-HC=CH₂ or-CH=CH₂; R² represents -(CH₂)ᵣ-OOC(CH₃)C=CH₂, -(CH₂)ᵣ-OOC-HC=CH₂ or -CH=CH₂; n represents a number of 1 to 420; and r represents a number of 1 to 6.

It is preferable in the fluorine-containing copolymer of this embodiment that monomer (D) is a monomer which has one or more groups selected from a hydroxyl group and an epoxy group, as a curing reactive group.

It is preferable in the fluorine-containing copolymer of this embodiment that monomer (D) is a monomer which has a group selected from an aliphatic saturated hydrocarbon group having 1 to 20 carbons, an alicyclic saturated hydrocarbon group having 1 to 20 carbons, and an alkylene glycol group in which the alkylene group has 1 to 20 carbons and the number of repeating units of the alkylene group is 1 to 10, including also the case where monomer (D) has the above described curing reactive group.

A method for producing the fluorine-containing copolymer of these embodiments can produce the fluorine-containing copolymer by reacting (A) in an amount of 15 to 85 mol% of the monomers used for the reaction, (B) in an amount of 0.001 to 10 mol% of the monomers used for the reaction, (C) in an amount of 5 to 40 mol% of the monomers used for the reaction, and (D) in an amount of 1 to 25 mol% of the monomers used for the reaction.

Preferred embodiments of the present invention will be further described below.

A coating composition containing a fluorine-containing copolymer of any of the above embodiments, and a curing agent for the fluorine-containing copolymer, wherein the curing agent is an adduct modified body or an allophanate modified body of a polyvalent isocyanate compound.

It is preferable in the coating composition of this embodiment that monomer (D) of the above described fluorine-containing copolymer is a monomer that has one or more groups selected from a hydroxyl group and an epoxy group, as a curing reactive group.

It is preferable in the coating composition of this embodiment that the above described curing agent is an adduct modified body or an allophanate modified body of a polyvalent isocyanate compound selected from hexamethylene diisocyanate, pentamethylene diisocyanate and isophorone diisocyanate, including also the case where monomer (D) of the above described fluorine-containing copolymer is the above described monomer.

It is more preferable in the coating composition of this embodiment that the above described curing agent is a compound which is an adduct modified body of a polyvalent isocyanate compound selected from hexamethylene diisocyanate, pentamethylene diisocyanate and isophorone diisocyanate, and has three or more NCO groups, or a compound which is an allophanate modified body and has three or more NCO groups, including also the case where monomer (D) of the above described fluorine-containing copolymer is the above described monomer.

When monomer (D) of the above described fluorine-containing copolymer is the above described monomer, it is preferable for the coating composition of this embodiment to contain 1 to 300 parts by mass of, more preferable to contain 2 to 250 parts by mass of, and further preferable to contain 3 to 200 parts by mass of the curing agent, based on 100 parts by mass of the fluorine-containing copolymer, including also the case where the curing agent is the above described adduct modified body or allophanate modified body.

When monomer (D) of the above described fluorine-containing copolymer is the above described monomer, and the curing agent is the above described adduct modified body or allophanate modified body, it is preferable for the coating composition of this embodiment to contain 5 to 99 mass% of, more preferable to contain 10 to 98 mass% of, and further preferable to contain 20 to 95 mass% of the solvent, preferably, an organic solvent in the coating composition, including also the case where the curing agent is contained in the above described range.

A preferred embodiment of the coating composition of the present invention will be further described below.

A coating composition containing:
the fluorine-containing copolymer of any of the above described embodiments, in an amount of preferably 0.5 to 90 mass% and more preferably 1 to 80 mass%;
the curing agent for the fluorine-containing copolymer in an amount of preferably 1 to 300 parts by mass, more preferably 2 to 250 parts by mass, and further preferably 3 to 200 parts, with respect to 100 parts by mass of the fluorine-containing copolymer; and
a solvent, preferably an organic solvent, in an amount of preferably 5 to 99 mass%, more preferably 10 to 98 mass%, and further preferably 20 to 95 mass%, wherein
monomer (D) of the above described fluorine-containing copolymer is a monomer having one or more groups selected from a hydroxyl group and an epoxy group, as a curing reactive group, and
the above described curing agent is a compound that is an adduct modified body of a polyvalent isocyanate compound selected from hexamethylene diisocyanate, pentamethylene diisocyanate and isophorone diisocyanate, and has three or more and preferably five or less NCO groups; or a compound that is an allophanate modified body which has three or more and preferably five or less NCO groups.

The coating composition of these embodiments can be produced by mixing the above described fluorine-containing copolymer with the above described curing agent.

A preferred embodiment of the present invention will be further described below.

A coated article including: a substrate; and a cured film of the coating composition of any of the above described embodiments formed on the substrate.

The coated article of this embodiment is preferably 0.5 to 1000 µm, more preferably 1 to 1000 µm, further preferably 1 to 200 µm, and furthermore preferably 5 to 100 µm.

A preferred embodiment of the present invention will be further described below.

A method for forming a cured film including applying the coating composition of any of the above embodiments to a substrate to form a coating film, and curing the coating film to form a cured film.

In the method for forming a cured film of this embodiment, the above described coating film is cured preferably at 30 to 250°C, and more preferably at 40 to 150°C.

### Examples

### Production Example and Comparative Production Example

A curable fluorine-containing copolymer was prepared in the following manner. In Tables 1 to 4, the monomer compositions of the copolymers are shown.

### (Production Example 1)

An autoclave (withstanding pressure of 10 MPa) which had an inner volume of 1 L and was equipped with a stainless steel stirrer was deaerated; then, 96 g of vinylidene fluoride (hereinafter abbreviated as VDF), 84 g of tetrafluoroethylene (hereinafter abbreviated as TFE), 36 g of normal butyl vinyl ether (hereinafter abbreviated as NBVE, and Tg of homopolymer: -55°C), 36 g of hydroxybutyl vinyl ether (hereinafter abbreviated as HBVE), 15 g of methacryl-modified silicone oil A (number average molecular weight of approximately 3,500) represented by the following structural formula, 450 ml of butyl acetate, and 1.0 g of t-butyl peroxypivalate were placed therein; and the internal temperature was raised to 60°C while the mixture was stirred.

Methacryl-modified silicone oil A:

CH₂=C(CH₃)-COO-C₃H₆-Si(CH₃)₂-[O-SiCH₃)₂]₄₄-OSi(CH₃)₃

After that, the reaction was continued while the mixture was stirred; and after 17 hours, the stirring was stopped and the reaction was ended. The obtained copolymer was isolated by reduced-pressure drying. A yield of the copolymer was 205 g, and a reaction ratio of the monomers was 77%. A hydroxyl value of the obtained copolymer, which was measured by an acetylation method with acetic anhydride, was 85 mg KOH/g resin; a fluorine content by a combustion method was 41 mass%; and a number average molecular weight was 3.3× 10⁴ and a weight average molecular weight was 1.8×10⁵, which were measured by GPC (gel permeation chromatography). This copolymer was dissolved in butyl acetate, and was used for the preparation of coating compositions in Examples 1, 2 and 3 and Comparative Example 5, as a butyl acetate solution (varnish) with a concentration of 20 mass%.

### (Production Example 2)

An autoclave (withstanding pressure of 10 MPa) which had an internal volume of 1 L and was equipped with a stainless steel stirrer was deaerated; then, 96 g of VDF, 84 g of TFE, 45 g of octadecyl vinyl ether (hereinafter abbreviated as ODVE, and Tg of homopolymer: lower than - 100°C), 36 g of HBVE, 26 g of cyclohexyl vinyl ether (hereinafter abbreviated as CHVE), 15 g of methacryl-modified silicone oil A (number average molecular weight of approximately 3500) similar to that in Example 1, 450 ml of butyl acetate, and 1.0 g of t-butyl peroxypivalate were placed therein; and the internal temperature was raised to 60°C while the mixture was stirred.

After that, the reaction was continued while the mixture was stirred; and after 17 hours, the stirring was stopped and the reaction was ended. The obtained copolymer was isolated by reduced-pressure drying. The yield of the copolymer was 243 g, and the reaction ratio of the monomers was 80%. The hydroxyl value of the obtained copolymer, which was measured by an acetylation method with acetic anhydride, was 72 mg KOH/g resin; the fluorine content by a combustion method was 35 mass%; and the number average molecular weight was 3.0× 10⁴ and the weight average molecular weight was 1.6×10⁵, which were measured by GPC (gel permeation chromatography). This copolymer was dissolved in butyl acetate, and was used for the preparation of coating compositions in Examples 4 and 5, as the butyl acetate solution (varnish) with the concentration of 20 mass%.

### (Production Example 3)

An autoclave (withstanding pressure of 10 MPa) which had an internal volume of 1 L and was equipped with a stainless steel stirrer was deaerated; then, 80 g of VDF, 70 g of TFE, 70 g of ethyl vinyl ether (hereinafter abbreviated as EVE, and Tg of homopolymer: -43°C), 39 g of HBVE, 15 g of methacryl-modified silicone oil A (number average molecular weight of approximately 3500) similar to that in Example 1, 450 ml of butyl acetate, and 1.0 g of t-butyl peroxypivalate were placed therein; and the internal temperature was raised to 60°C while the mixture was stirred.

After that, the reaction was continued while the mixture was stirred; and after 17 hours, the stirring was stopped and the reaction was ended. The obtained copolymer was isolated by reduced-pressure drying. The yield of the copolymer was 164 g, and the reaction ratio of the monomers was 60%. The hydroxyl value of the obtained copolymer, which was measured by an acetylation method with acetic anhydride, was 115 mg KOH/g resin; the fluorine content by a combustion method was 22 mass%; and the number average molecular weight was 6.5× 10⁴ and the weight average molecular weight was 1.3×10⁵, which were measured by GPC (gel permeation chromatography). This copolymer was dissolved in butyl acetate, and was used for the preparation of coating compositions in Examples 6 and 7, as the butyl acetate solution (varnish) with the concentration of 20 mass%.

### (Production Example 4)

An autoclave (withstanding pressure of 10 MPa) which had an internal volume of 1 L and was equipped with a stainless steel stirrer was deaerated; then, 96 g of VDF, 84 g of TFE, 36 g of NBVE, 39 g of HBVE, 16 g of methacryl-modified silicone oil B (number average molecular weight of approximately 8000) represented by the following structural formula, 450 ml of butyl acetate, and 1.0 g of t-butyl peroxypivalate were placed therein; and the internal temperature was raised to 60°C while the mixture was stirred.

Methacryl-modified silicone oil B:

CH₂=C(CH₃)-COO-C₃H₆-Si(CH₃)₂-[O-Si(CH₃)₂]₁₄₀-OSi(CH₃)₃

After that, the reaction was continued while the mixture was stirred; and after 17 hours, the stirring was stopped and the reaction was ended. The obtained copolymer was isolated by reduced-pressure drying. The yield of the copolymer was 208 g, and the reaction ratio of the monomer was 87%. The hydroxyl value of the obtained copolymer, which was measured by an acetylation method with acetic anhydride, was 67 mg KOH/g resin; the fluorine content by a combustion method was 39 mass%; and the number average molecular weight was 3.4×10 and the weight average molecular weight was 2.3×10⁵, which were measured by GPC (gel permeation chromatography). This copolymer was dissolved in butyl acetate, and was used for the preparation of coating compositions in Examples 8 and 9, as the butyl acetate solution (varnish) with the concentration of 20 mass%.

### (Production Example 5)

An autoclave (withstanding pressure of 10 MPa) which had an internal volume of 1 L and was equipped with a stainless steel stirrer was deaerated; then, 56 g of VDF, 87 g of TFE, 49 g of NBVE, 14 g of HBVE, 13g of CHVE, 15 g of methacryl-modified silicone oil A (number average molecular weight of approximately 3500) similar to that in Example 1, 450 ml of butyl acetate, and 1.0 g of t-butyl peroxypivalate were placed therein; and the internal temperature was raised to 60°C while the mixture was stirred.

After that, the reaction was continued while the mixture was stirred; and after 17 hours, the stirring was stopped and the reaction was ended. The obtained copolymer was isolated by reduced-pressure drying. The yield of the copolymer was 204 g, and the reaction ratio of the monomer was 87%. The hydroxyl value of the obtained copolymer, which was measured by an acetylation method with acetic anhydride, was 34 mg KOH/g resin; the fluorine content by a combustion method was 40 mass%; and the number average molecular weight was 3.1× 10⁴ and the weight average molecular weight was 1.6×10⁵, which were measured by GPC (gel permeation chromatography). This copolymer was dissolved in butyl acetate, and was used for the preparation of coating compositions in Examples 10 and 11, as the butyl acetate solution (varnish) with the concentration of 20 mass%.

### (Production Example 6)

An autoclave (withstanding pressure of 10 MPa) which had an internal volume of 1 L and was equipped with a stainless steel stirrer was deaerated; then, 96 g of VDF, 84 g of TFE, 60 g of NBVE, 24 g of hydroxyethyl vinyl ether (hereinafter abbreviated as HEVE), 15 g of methacryl-modified silicone oil A (number average molecular weight of approximately 3500) similar to that in Example 1, 450 ml of butyl acetate, and 1.0 g of t-butyl peroxypivalate were placed therein, and the internal temperature was raised to 60°C while the mixture was stirred.

After that, the reaction was continued while the mixture was stirred; and after 17 hours, the stirring was stopped and the reaction was ended. The obtained copolymer was isolated by reduced-pressure drying. The yield of the copolymer was 198 g, and the reaction ratio of the monomer was 78%. The hydroxyl value of the obtained copolymer, which was measured by an acetylation method with acetic anhydride, was 46 mg KOH/g resin; the fluorine content by a combustion method was 43 mass%; and the number average molecular weight was 2.1× 10⁴ and the weight average molecular weight was 1.1×10⁵, which were measured by GPC (gel permeation chromatography). This copolymer was dissolved in butyl acetate, and was used for the preparation of coating compositions in Examples 12 and 13, as the butyl acetate solution (varnish) with the concentration of 20 mass%.

### (Comparative Production Example 1)

An autoclave (withstanding pressure of 10 MPa) which had an internal volume of 1 L and was equipped with a stainless steel stirrer was deaerated; then, 56 g of VDF, 87 g of TFE, 35 g of HBVE, 53 g of CHVE, 15 g of methacryl-modified silicone oil A (number average molecular weight of approximately 3500) similar to that in Example 1, 450 ml of butyl acetate, and 1.0 g of t-butyl peroxypivalate were placed therein; and the internal temperature was raised to 60°C while the mixture was stirred.

After that, the reaction was continued while the mixture was stirred; and after 17 hours, the stirring was stopped and the reaction was ended. The obtained copolymer was isolated by reduced-pressure drying. The yield of the copolymer was 204 g, and the reaction ratio of the monomer was 83%. The hydroxyl value of the obtained copolymer, which was measured by an acetylation method with acetic anhydride, was 83 mg KOH/g resin; the fluorine content by a combustion method was 36 mass%; and the number average molecular weight was 2.8× 10⁴ and the weight average molecular weight was 1.7×10⁵, which were measured by GPC (gel permeation chromatography). This copolymer was dissolved in butyl acetate, and was used for the preparation of a coating composition in Comparative Example 1, as the butyl acetate solution (varnish) with the concentration of 20 mass%.

### (Comparative Production Example 2)

An autoclave (withstanding pressure of 10 MPa) which had an internal volume of 1 L and was equipped with a stainless steel stirrer was deaerated; then, 56 g of VDF, 87 g of TFE, 28 g of NBVE, 29 g of HBVE, 25 g of CHVE, 450 ml of butyl acetate, and 1.0 g of t-butyl peroxypivalate were placed therein; and the internal temperature was raised to 60°C while the mixture was stirred.

After that, the reaction was continued while the mixture was stirred; and after 17 hours, the stirring was stopped and the reaction was ended. The obtained copolymer was isolated by reduced-pressure drying. The yield of the copolymer was 190 g, and the reaction ratio of the monomer was 85%. The hydroxyl value of the obtained copolymer, which was measured by an acetylation method with acetic anhydride, was 73 mg KOH/g resin; the fluorine content by a combustion method was 40 mass%: and the number average molecular weight was 3.2× 10⁴ and the weight average molecular weight was 2.1×10⁵, which were measured by GPC (gel permeation chromatography). This copolymer was dissolved in butyl acetate, and was used for the preparation of coating compositions in Comparative Examples 2 to 4, as the butyl acetate solution (varnish) with the concentration of 20 mass%.

### [Tg measurement]

The butyl acetate solution (varnish) of the fluorine-containing copolymer was dried under conditions of 100°C for 24 hours to be used as a sample; the sample was placed in an input-compensated double furnace differential scanning calorimeter DSC8000 (made by PerkinElmer Co., Ltd.); and the Tg was measured under a nitrogen atmosphere at a rate of temperature rise of 10°C/min in a measurement range of -50°C to +150°C. The results are shown in Tables 1 to 4.

### Examples and Comparative Examples

### <Preparation of coating composition>

### [Preparation of coating composition (1) : not according to the invention

An adduct modified body of hexamethylene diisocyanate by trimethylolpropane (NCO content of 7%) (Duranate E402-80B made by Asahi Kasei Chemicals Corporation) (trifunctional) was added as a curing agent, to each solution of the fluorine-containing copolymer in Production Examples 1 to 6 and Comparative Production Examples 1 and 2, at a ratio of NCO/OH=1.1; the mixture was diluted by butyl acetate so that the solid-content concentration of the solution became 23%; and thus a coating composition was prepared. The curing agent used here is shown as "adduct modified body", in Tables. Incidentally, the amount of the curing agent was in a range of 12.8 to 34.0 parts by mass with respect to 100 parts by mass of the fluorine-containing copolymer.

### [Preparation of coating composition (2)]

An allophanate modified body by pentamethylene diisocyanate (NCO content of 16.2%) (Coronate 2793 made by Tosoh Corporation) (pentafunctional) was added as a curing agent, to each of the solutions of the fluorine-containing copolymer in Production Examples 1 to 6 and Comparative Production Example 2, at a ratio of NCO/OH=1.1; the mixture was diluted by butyl acetate so that the solid-content concentration of the solution became 23%; and thus a coating composition was prepared. The curing agent used here was shown as "allophanate modified body 1", in Tables. Incidentally, the amount of the curing agent was in a range of 5.6 to 14.8 parts by mass with respect to 100 parts by mass of the fluorine-containing copolymer.

### [Preparation of coating composition (3) not according to the invention

An isocyanurate modified body of hexamethylene diisocyanate (NCO content of 21%) (Coronate HX made by Tosoh Corporation) (trifunctional) was added as a comparative curing agent, to the solution of the fluorine-containing copolymer in Production Example 1, at a ratio of NCO/OH=1.1; the mixture was diluted by butyl acetate so that the solid-content concentration of the solution became 23%; and thus a coating composition of Comparative Example 5 was prepared. The curing agent used here is shown as "isocyanurate modified body", in Tables. Incidentally, the amount of the curing agent was 10.8 parts by mass with respect to 100 parts by mass of the fluorine-containing copolymer.

### [Preparation of coating composition (4)]

An allophanate modified body by hexamethylene diisocyanate (NCO content of 19.5%) (Duranate D101 made by Asahi Kasei Chemicals Corporation) (difunctional) was added as a curing agent, to the solution of the fluorine-containing copolymer in Production Example 1, at a ratio of NCO/OH=1.1; the mixture was diluted by butyl acetate so that the solid-content concentration of the solution became 23%; and thus a coating composition of Example 3 was prepared. The curing agent used here was shown as "allophanate modified body 2", in Tables. Incidentally, the amount of the curing agent was 17.7 parts by mass with respect to 100 parts by mass of the fluorine-containing copolymer.

### <Production of coating film and coated article>

### [Substrate: glass plate]

A coating composition was applied by hand to a glass plate with a thickness of 2 mm, of which the surface was degreased with acetone, using a bar coater #20 (calculated value of film thickness after drying: approximately 10 µm); the resultant film was heated and cured in a drying machine which was heated to 100°C, for 4 hours; and a coated article was obtained on which a coating film composed of the fluorine-containing copolymer and its curing agent of Example or Comparative Example was formed. The coating films of the coated articles were subjected to the following evaluation. The results are shown in Tables 1 to 4.

### [Substrate: urethane rubber film]

A coating composition was applied by hand to a polyester-based urethane rubber film with a thickness of 1 mm, of which the surface was degreased with isopropyl alcohol, using a bar coater #10 (calculated value of film thickness after drying: approximately 5 µm); and the resultant film was heated and cured in a drying machine which was heated to 120°C, for 3 minutes, and then was cured at 50°C for 3 days. Thereby, the coated article was obtained on which a coating film composed of the fluorine-containing copolymer and its curing agent of Example or Comparative Example was formed. The coating films of these coated articles were subjected to "scratch resistance test (brass brush)" which would be described later. The results are shown in Tables 1 to 4.

### [Substrate: thermoplastic polyester-based polyurethane (TPU) film for coating film protective film]

A coating film protective film including a release paper, an adhesive layer, a urethane layer, and a coating film composed of a fluorine-containing copolymer and its curing agent, was produced in the following procedure.

### (1) Production of composite material (I)

A coating composition was applied by hand to a thermoplastic polyester-based polyurethane (TPU) film (SHG 2086-CR (6OPP) made by Sheedom Co., Ltd.) of a substrate with a thickness of 150 µm, using a bar coater #10 (calculated value of film thickness after drying: approximately 5 µm), and a bar coater #20 (calculated value of film thickness after drying: approximately 10 µm); and the resultant films were heated and cured in a drying machine which was heated to 120°C, for 1 minute, and then were cured at 60°C for 3 days. Thereby, composite materials (I) were obtained each of which had a coating film composed of a fluorine-containing copolymer and its curing agent of Example or Comparative Example formed on one side of the TPU film.

### (2) Production of composite material (II)

In a flask equipped with a reflux condenser and a stirrer, 95 parts by mass of butyl acrylate, 5 parts by mass of acrylic acid, a peroxide-based initiator and toluene (solvent) were mixed; the mixture was heated and stirred under a nitrogen atmosphere; and an acrylic polymer (weight average molecular weight = 500,000) was obtained due to a polymerization reaction.

An adhesive was obtained by mixing of 100 parts by mass of the above described acrylic polymer (calculated based on the form of solid content) with 0.01 parts by mass of an epoxy-based crosslinking agent (trade name: TETRAD-X, made by Mitsubishi Gas Chemical Company Inc.).

The above described adhesive was coated on a release paper (thickness of 170 µm) using a knife coater so that a film thickness after drying became approximately 20 µm; the resultant adhesive was dried to form an adhesive layer on the release paper; and thus a composite material (II) of the adhesive and the release paper was obtained.

### (3) Production of coating film protective film

The adhesive layer of the above described composite material (II) was stuck onto the surface of the TPU substrate of the above described composite material (I), which corresponded to a reverse side of a surface on which a coating film composed of a fluorine-containing copolymer and its curing agent was coated, and was not coated with the coating film, and thus a coating film protective film was produced.

The surface of the above described coating film of this coating film protective film was subjected to "scratch resistance test (brass brush)" which is described below. The results are shown in Tables 1 to 4.

### [Substrate: vinyl chloride (PVC) film for coating film protective film]

A coating film protective film was produced under the same conditions and in the same process as those of the coating film protective film which used the above described TPU, except that a non-phthalic acid-based vinyl chloride film with a thickness of 0.3 mm (Celeb 267 (hardness of #360), sold by Ishizuka Co., Ltd.) was used as the substrate. The surface of the above described coating film of this coating film protective film was subjected to "scratch resistance test (brass brush)" which is described below. The results are shown in Tables 1 to 4.

### [Substrate: PET film for coating film protective film]

A coating film protective film was produced under the same conditions and in the same process as those of the coating film protective film which used the above described TPU, except that an easily-adhesive PET film with a thickness of 125 µm (Cosmo Shine A4300, made by Toyobo Co., Ltd.) was used as the substrate. The surface of the above described coating film in this coating film protective film was subjected to "scratch resistance test (brass brush)" which is described below. The results are shown in Tables 1 to 4.

### [Adhesiveness to substrate]

The adhesiveness to the substrate was measured by the following two methods according to JIS-K 5400 8.5.2 (1990) (cross-cut tape test).
- Subjecting the surface of the coating film to measurement as it is (which is marked as untreated, in the table).
- Subjecting the surface of the coating film to measurement, which was lightly treated with a sandpaper (particle size of 1200) to such an extent that the coating film is not peeled off (which is marked as sandpaper treatment, in Tables).

### [Acid resistance]

The appearance of the coating film was visually observed after a spot test by a 10% HCl solution for 24 hours, and the result was determined according to the following criteria.
A: No abnormality
B: Almost no change
C: Slightly damaged
D: Damaged

### [Alkali resistance]

The appearance of the coating film was visually observed after a spot test by a 10% NaOH solution for 24 hours, and the result was determined according to the following criteria.
A: No abnormality
B: Almost no change
C: Slightly damaged
D: Damaged

### [Solvent resistance]

The appearance of the coating film was visually observed after a spot test by xylene for 30 minutes, and the result was determined according to the following criteria.
A: No abnormality
B: Almost no change
C: Slightly damaged
D: Damaged

### [Removability of oil-based ink]

The surface of the coating film was blotted wholly by an oil-based felt pen (black), and was left at room temperature for 1 hour; and then the ink was removed by rubbing with a dry cloth. The removability of the ink on the surface of the coating film at that time was evaluated according to the following criteria. Incidentally, Magic ink (trade name) made by Teranishi Chemical Industry Co., Ltd was used for the black oily felt pen.
A: Showing no mark
B: Showing slight mark
C: Showing considerable marks
D: Leaving mark completely

### [Contact angle]

The contact angle (unit: degree) of pure water and oleic acid on the coating film was measured using DropMaster DM 300 (made by Kyowa Interface Science Inc.), under the conditions of a temperature of 20°C, a humidity of 40% RH, and a dropping amount of 10 µL.

### [Accelerated weathering test]

A gloss value at 60° of the coating film was measured using GLOSS CHECKER IG-330 (Horiba, Ltd.) at levels of n=3. After that, the coating film was subjected to an accelerated weathering test of using a super accelerated weathering tester, Metal Weather KW-R7TP (made by Daipla Wintes Co., Ltd.) and performing 8 cycles in total therein, of which one cycle included irradiating the coating film with ultraviolet rays for 20 hours under the conditions that an intensity of ultraviolet rays was 65 mW/cm², a black panel temperature was 53°C and a relative humidity was 50%, and leaving the coating film in a non-irradiation state for 4 hours under the conditions that a black panel temperature was 30°C and the relative humidity was 98%. The gloss value at 60°of the coating film after the UV irradiation was measured with a similar method to that before the irradiation, and the gloss retention was determined by the following expression. Incidentally, Examples which were not subjected to the accelerated weathering test were described as "ND", in Tables. $Gloss retention \left(%\right) = \left\{gloss value at 60°\left(\begin{matrix}after \\ irradiation\end{matrix}\right)/gloss value at 60°\left(\begin{matrix}before \\ irradiation\end{matrix}\right)\right\} \times 100$

### [Scratch resistance test (brass brush)]

Under an environment of a temperature of 20°C, a load of 200 g was mounted on a brass brush of 180 mm (ESCO), the resultant brush was reciprocated 20 times on the coating film (movement width of 40 mm, and movement speed of 80 mm/sec), and a time period needed until the scratch was recovered was measured up to 2 minutes at the maximum.

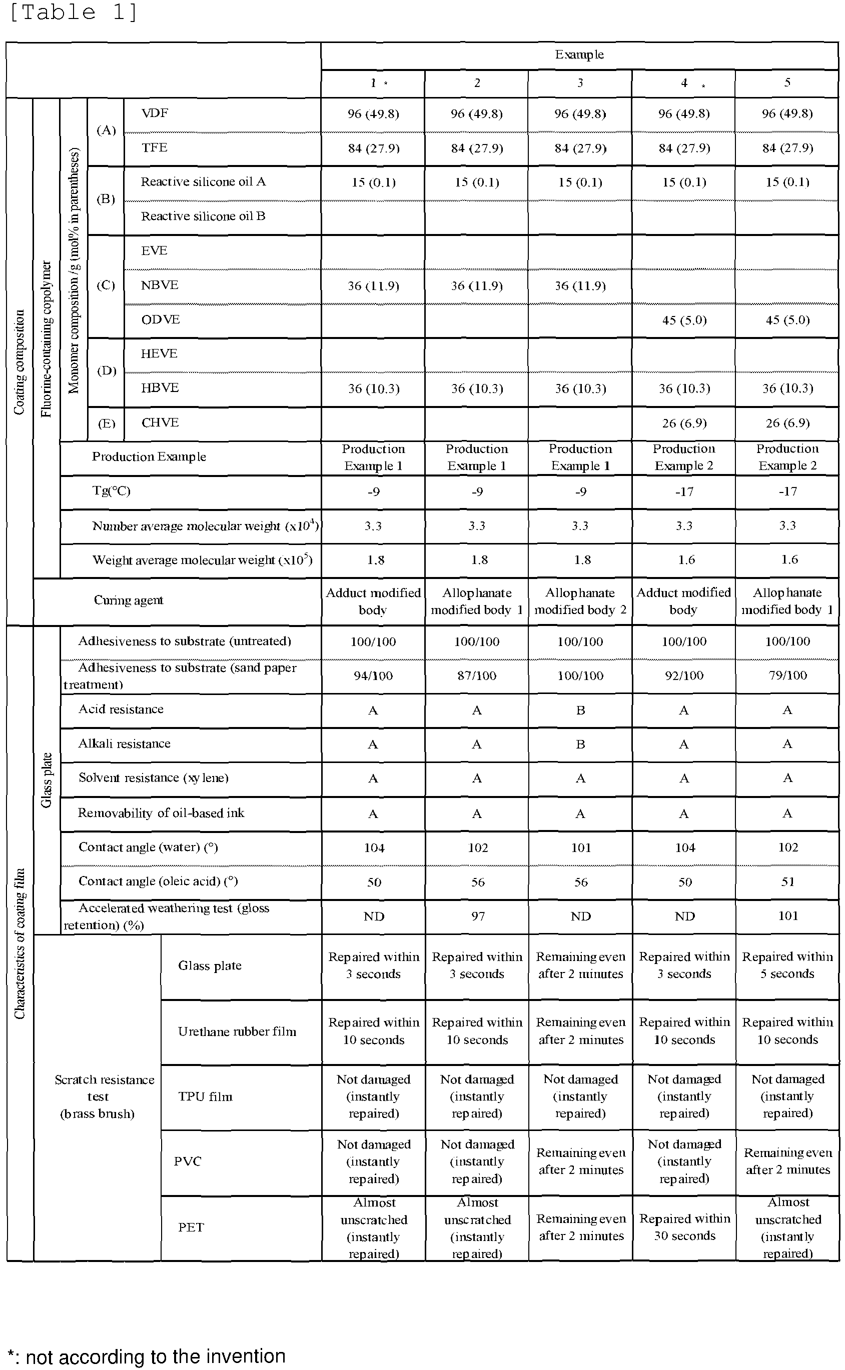

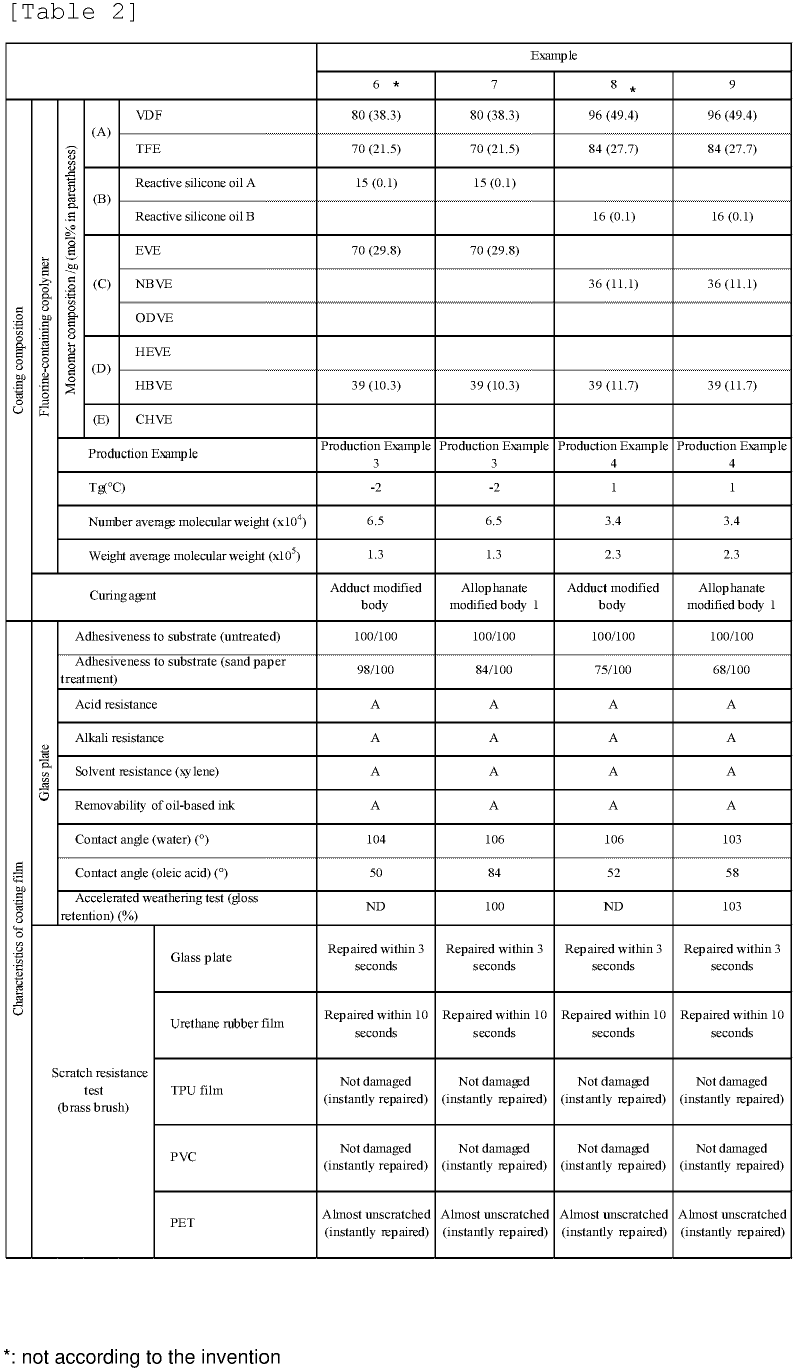

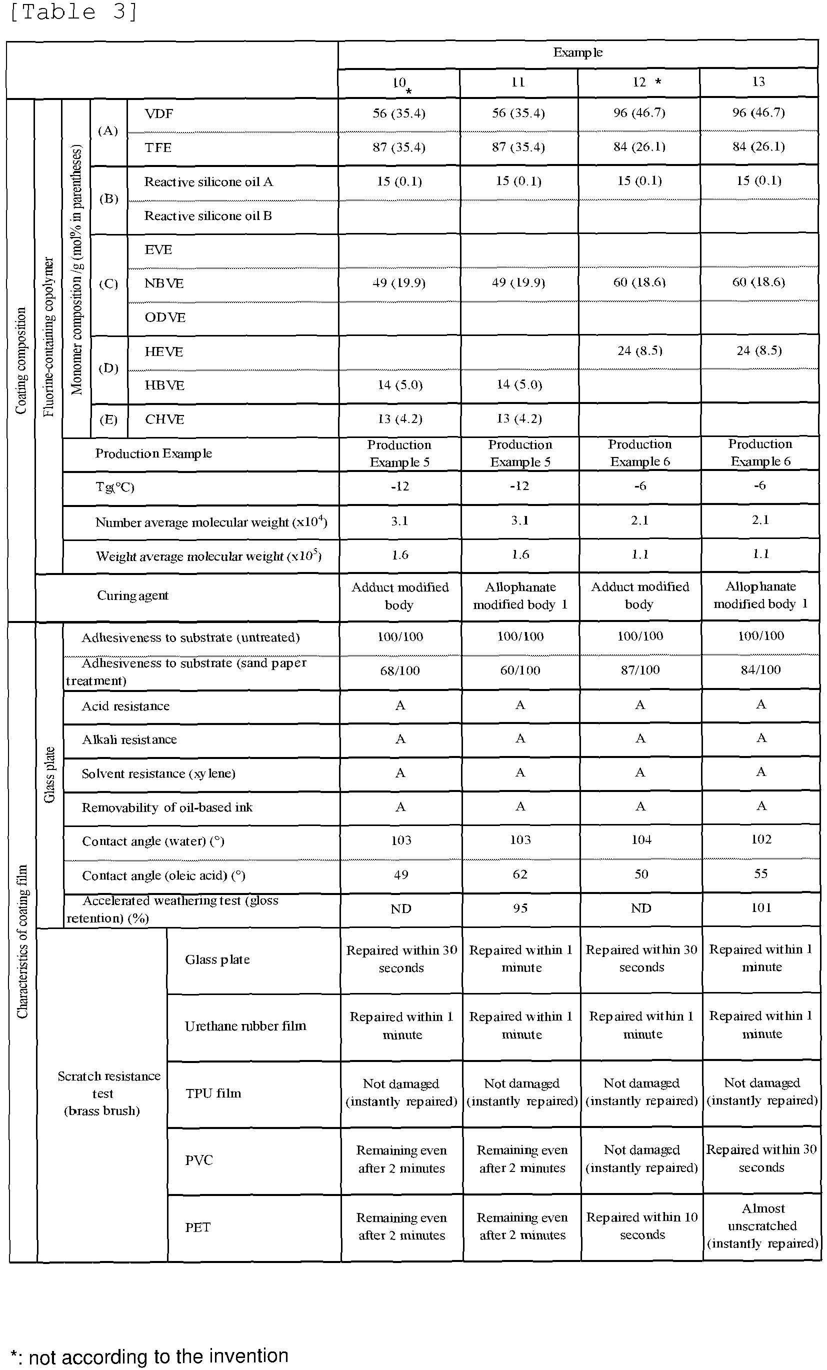

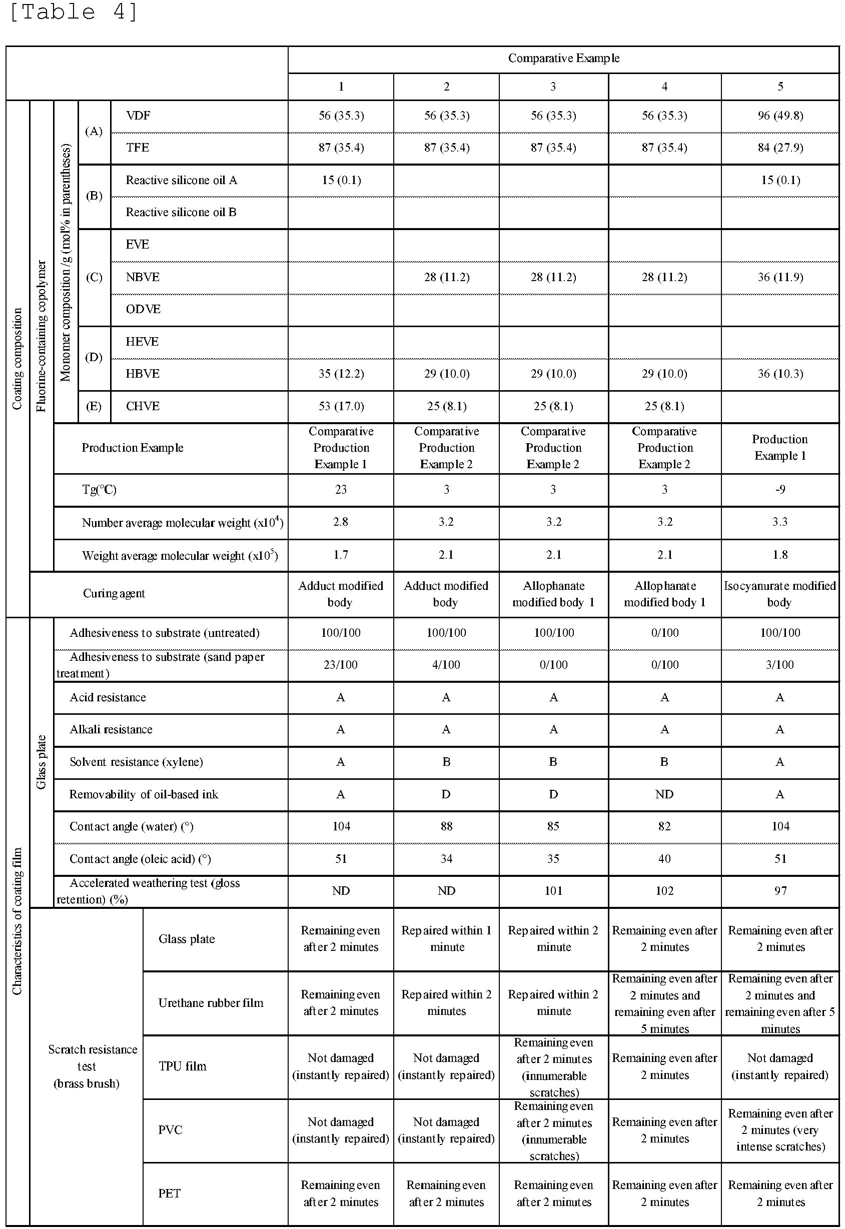

## Claims

1. A coating composition, comprising the following fluorine-containing copolymer and a curing agent for the fluorine-containing copolymer, wherein the curing agent is an allophanate modified body of a polyvalent isocyanate compound of the following formula (II) 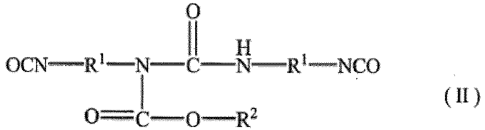 wherein in formula (II) R¹ is an alkylene group having 5 or 6 carbons, or an isophorone group, and R² is an aliphatic or alicyclic saturated hydrocarbon group having 1 to 20 carbons, which may have a branch;
<fluorine-containing copolymer>
the fluorine-containing copolymer comprising:
(A) a fluoroolefin in an amount of 15 to 85 mol% of all constituent monomers;
(B) one or more organosilicon compounds selected from compounds represented by the following general formula (1) and compounds represented by the following general formula (2), in an amount of 0.001 to 10 mol% of all the constituent monomers;
(C) one or more monomers selected from vinyl ethers, vinyl esters, methacrylic esters and acrylic esters, the one or more monomers not having a curing reactive group and having an aliphatic saturated hydrocarbon group with 1 to 20 carbons, and a glass transition temperature of a homopolymer of the monomer being lower than 0°C, in an amount of 5 to 40 mol% of all the constituent monomers; and
(D) one or more monomers [hereinafter referred to as a monomer (D)] selected from vinyl ethers, vinyl esters, allyl ethers, methacrylic esters and acrylic esters, and having a curing reactive group, in an amount of 1 to 25 mol% of all the constituent monomers, wherein the fluorine-containing copolymer has a glass transition temperature of -30°C to 20°C,
a number average molecular weight of 2.0×10⁴ to 7.0×10⁴, and
a weight average molecular weight of 1.0×10⁵ to 3.0×10⁵, 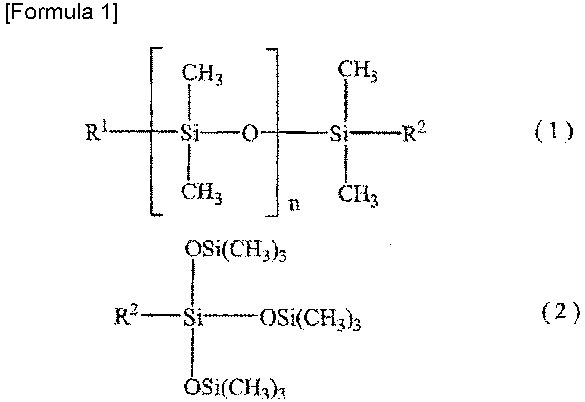 wherein R¹ represents an alkyl group having 1 to 6 carbons, -(CH₂)ᵣ-OOC(CH₃)C=CH₂, -(CH₂)ᵣ-OOC-HC=CH₂ or -CH=CH₂, R² represents -(CH₂)ᵣ-OOC(CH₃)C=CH₂, -(CH₂)ᵣ-OOC-HC=CH₂ or -CH=CH₂, n represents a number of 1 to 420, and r represents a number of 1 to 6,
wherein the glass transition temperature is determined with a differential scanning calorimeter,
and the number average molecular weight and the weight average molecular weight are determined by gel permeation chromatography, according to the methods disclosed in present specification.

2. The coating composition according to claim 1, wherein the curing agent is an allophanate modified body of a polyvalent isocyanate compound selected from hexamethylene diisocyanate, pentamethylene diisocyanate and isophorone diisocyanate.

3. The coating composition according to claim 1 or 2, containing 1 to 300 parts by mass of the curing agent based on 100 parts by mass of the fluorine-containing copolymer.

4. The coating composition according to any one of claims 1 to 3, wherein the monomer (D) has one or more groups selected from a hydroxyl group and an epoxy group, as a curing reactive group.

5. The coating composition according to any one of claims 1 to 4, wherein the monomer (D) has a group selected from an aliphatic saturated hydrocarbon group having 1 to 20 carbons, an alicyclic saturated hydrocarbon group having 1 to 20 carbons, and an alkylene glycol group in which an alkylene group has 1 to 20 carbons and the number of repeating units of the alkylene group is 1 to 10.

6. A method for producing the coating composition according to any one of claims 1 to 5, comprising mixing the fluorine-containing copolymer with the curing agent.

7. A coated article comprising: a substrate; and a cured film of the coating composition according to any one of claims 1 to 5 formed on the substrate.

8. The coated article according to claim 7, wherein a film thickness of the cured film is 0.5 to 1000 µm.

9. A method for forming a cured film, comprising:
applying the coating composition according to any one of claims 1 to 5 to a substrate to form a coating film; and
curing the coating film to form a cured film.

10. The method for forming a cured film according to claim 9, wherein the coating film is cured at 30 to 250°C.

## Patentansprüche

1. Eine Beschichtungszusammensetzung, umfassend das folgende fluorhaltige Copolymer und ein Härtungsmittel für das fluorhaltige Copolymer, wobei das Härtungsmittel ein allophanatmodifizierter Körper aus einer polyvalenten Isocyanatverbindung der folgenden 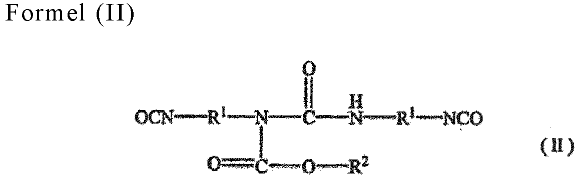 ist, wobei in Formel (II) R¹ eine Alkylengruppe mit 5 oder 6 Kohlenstoffen oder eine Isophorongruppe ist und R² eine aliphatische oder alicyclische gesättigte Kohlenwasserstoffgruppe mit 1 bis 20 Kohlenstoffen ist, die eine Verzweigung aufweisen kann;
<fluorhaltiges Copolymer>
das fluorhaltige Copolymer umfasst:
(A) ein Fluorolefin in einer Menge von 15 bis 85 Mol-% aller enthaltenen Monomere;
(B) eine oder mehrere Organosiliciumverbindungen, ausgewählt aus Verbindungen der folgenden allgemeinen Formel (1) und Verbindungen der folgenden allgemeinen Formel (2) in einer Menge von 0,001 bis 10 Mol-% aller enthaltenen Monomere;
(C) ein oder mehrere Monomere, ausgewählt aus Vinylethern, Vinylestern, Methacrylsäureestern und Acrylsäureestern, wobei das eine oder die mehreren Monomere keine härtungsreaktive Gruppe und eine aliphatische gesättigte Kohlenwasserstoffgruppe mit 1 bis 20 Kohlenstoffen aufweisen, und eine Glasübergangstemperatur eines Homopolymers des Monomers von weniger als 0°C aufweisen in einer Menge von 5 bis 40 Mol-% aller enthaltenen Monomere; und
(D) ein oder mehrere Monomere [im Folgenden als Monomer (D) bezeichnet], die aus Vinylethern, Vinylestern, Allylethern, Methacrylsäureestern und Acrylsäureestern ausgewählt sind und eine härtungsreaktive Gruppe aufweisen in einer Menge von 1 bis 25 Mol-% aller enthaltenen Monomere, wobei das fluorhaltige Copolymer eine Glasübergangstemperatur von -30°C bis 20°C,
ein zahlenmittleres Molekulargewicht von 2,0 x 10⁴ bis 7,0 x 10⁴ und ein gewichtsmittleres Molekulargewicht von 1,0 x 10⁵ bis 3,0 x 10⁵ aufweist, 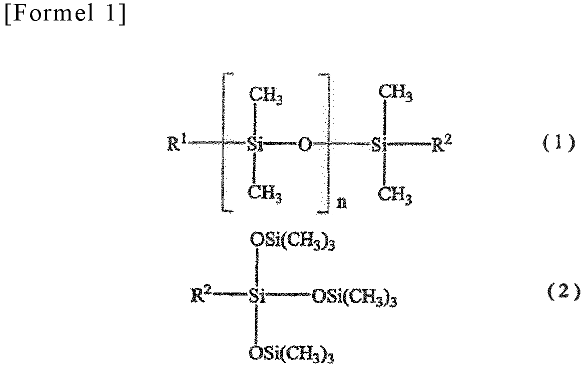 wobei R¹ eine Alkylgruppe mit 1 bis 6 Kohlenstoffen, -(CH₂)ᵣ-OOC(CH₃)C=CH₂, -(CH₂)ᵣ-OOC-HC=CH₂ oder -CH=CH₂ darstellt, R² -(CH₂)ᵣ-OOC(CH₃)C=CH₂, -(CH₂)ᵣ-OOC-HC=CH₂ oder -CH=CH₂ darstellt, n eine Zahl von 1 bis 420, und r eine Zahl von 1 bis 6 darstellt,
wobei die Glasübergangstemperatur mit einem Differentialkalorimeter bestimmt wird,
und das zahlenmittlere Molekulargewicht und das gewichtsmittlere Molekulargewicht durch Gelpermeationschromatographie gemäß den in der vorliegenden Beschreibung offengelegten Methoden bestimmt werden.

2. Die Beschichtungszusammensetzung nach Anspruch 1, wobei das Härtungsmittel ein allophanatmodifizierter Körper einer mehrwertigen Isocyanatverbindung ist, ausgewählt aus Hexamethylendiisocyanat, Pentamethylendiisocyanat und Isophorondiisocyanat.

3. Die Beschichtungszusammensetzung nach Anspruch 1 oder 2, enthaltend 1 bis 300 Masseteile des Härtungsmittels, bezogen auf 100 Masseteile des fluorhaltigen Copolymers.

4. Die Beschichtungszusammensetzung nach einem der Ansprüche 1 bis 3, wobei das Monomer (D) eine oder mehrere Gruppen, ausgewählt aus einer Hydroxylgruppe und einer Epoxygruppe, als härtungsreaktive Gruppe aufweist.

5. Die Beschichtungszusammensetzung nach einem der Ansprüche 1 bis 4, wobei das Monomer (D) eine Gruppe aufweist, ausgewählt aus einer aliphatischen gesättigten Kohlenwasserstoffgruppe mit 1 bis 20 Kohlenstoffen, einer alicyclischen gesättigten Kohlenwasserstoffgruppe mit 1 bis 20 Kohlenstoffen und einer Alkylenglykolgruppe, in der eine Alkylengruppe 1 bis 20 Kohlenstoffe aufweist und die Anzahl der sich wiederholenden Einheiten der Alkylengruppe 1 bis 10 beträgt.

6. Ein Verfahren zur Herstellung der Beschichtungszusammensetzung nach einem der Ansprüche 1 bis 5, umfassend das Mischen des fluorhaltigen Copolymers mit dem Härtungsmittel.

7. Ein beschichteter Gegenstand, umfassend: ein Substrat; und einen gehärteten Film der Beschichtungszusammensetzung nach einem der Ansprüche 1 bis 5, auf dem Substrat gebildet.

8. Der beschichtete Gegenstand nach Anspruch 7, wobei die Filmdicke des gehärteten Films 0,5 bis 1000 µm beträgt.

9. Ein Verfahren zur Bildung eines gehärteten Films, umfassend:
Auftragen der Beschichtungszusammensetzung nach einem der Ansprüche 1 bis 5 auf ein Substrat, um einen Beschichtungsfilm zu bilden; und
Härten des Beschichtungsfilms, um einen gehärteten Film zu bilden.

10. Das Verfahren zur Bildung eines gehärteten Films nach Anspruch 9, wobei der Beschichtungsfilm bei 30 bis 250°C gehärtet wird.

## Revendications

1. Composition de revêtement, comprenant le copolymère contenant du fluor suivant et un agent de durcissement pour le copolymère contenant du fluor, dans laquelle l'agent de durcissement est un corps modifié par allophanate d'un composé isocyanate polyvalent répondant à la formule (II) suivante 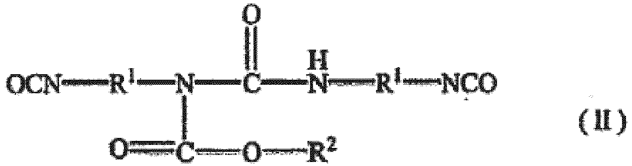 dans laquelle dans la formule (II) R¹ est un groupe alkylène ayant 5 ou 6 carbones, ou un groupe isophorone, et R² est un groupe hydrocarboné saturé aliphatique ou alicyclique ayant 1 à 20 carbones, qui peut avoir une ramification ;
le copolymère contenant du fluor comprenant :
(A) une fluorooléfine en une quantité allant de 15 à 85% en moles de tous les monomères constitutifs ;
(B) un ou plusieurs composés d'organosilicium choisis parmi des composés représentés par la formule générale (1) suivante et des composés représentés par la formule générale (2) suivante, en une quantité allant de 0,001 à 10% en moles de tous les monomères constitutifs ;
(C) un ou plusieurs monomères choisis parmi des éthers vinyliques, des esters vinyliques, des esters méthacryliques et des esters acryliques, le ou les plusieurs monomères n'ayant pas de groupe réactif de durcissement et ayant un groupe hydrocarboné saturé aliphatique avec 1 à 20 carbones, et une température de transition vitreuse d'un homopolymère du monomère étant inférieure à 0°C, en une quantité allant de 5 à 40% en moles de tous les monomères constitutifs ; et
(D) un ou plusieurs monomères [ci-après dénommés monomère (D)] choisis parmi des éthers vinyliques, des esters vinyliques, des éthers allyliques, des esters méthacryliques et des esters acryliques, et ayant un groupe réactif de durcissement, en une quantité allant de 1 à 25% en moles de tous les monomères constitutifs, dans laquelle le copolymère contenant du fluor a
une température de transition vitreuse allant de -30°C à 20°C,
un poids moléculaire moyen en nombre allant de 2,0×10⁴ à 7,0×10⁴, et
un poids moléculaire moyen en poids allant de 1,0×10⁵ à 3,0×10⁵, 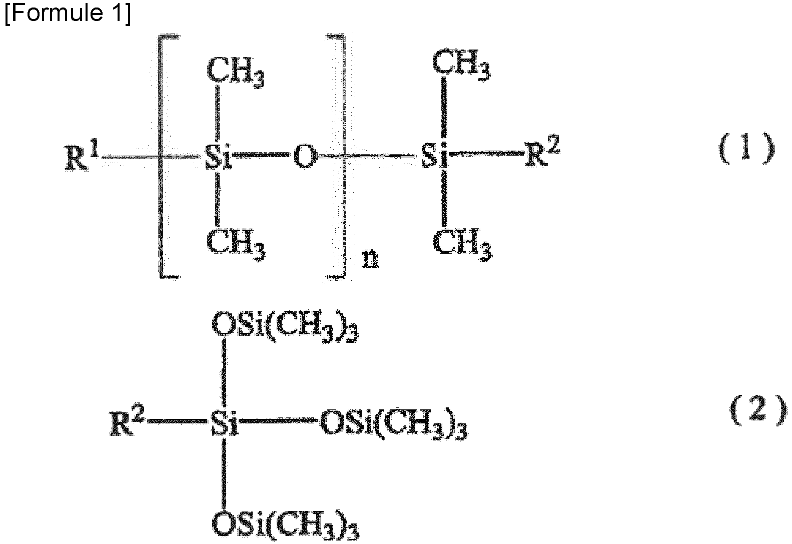
dans laquelle R¹ représente un groupe alkyle ayant 1 à 6 carbones, - (CH₂)ᵣ-OOC(CH₃)C=CH₂, -(CH₂)ᵣ-OOC-HC=CH₂ ou -CH=CH₂, R² représente - (CH₂)ᵣ- OOC(CH₃)C=CH₂, -(CH₂)ᵣ-OOC-HC=CH₂ ou -CH=CH₂, n représente un nombre de 1 à 420, et r représente un nombre de 1 à 6,
dans laquelle la température de transition vitreuse est déterminée avec un calorimètre à balayage différentiel,
et le poids moléculaire moyen en nombre et le poids moléculaire moyen en poids sont déterminés par chromatographie par perméation de gel, selon les procédés divulgués dans la présente description.

2. Composition de revêtement selon la revendication 1, dans laquelle l'agent de durcissement est un corps modifié par allophanate d'un composé isocyanate polyvalent choisi parmi l'hexaméthylène diisocyanate, le pentaméthylène diisocyanate et l'isophorone diisocyanate.

3. Composition de revêtement selon la revendication 1 ou 2, contenant 1 à 300 parties en masse de l'agent de durcissement par rapport à 100 parties en masse du copolymère contenant du fluor.

4. Composition de revêtement selon l'une quelconque des revendications 1 à 3, dans laquelle le monomère (D) a un ou plusieurs groupes choisis parmi un groupe hydroxyle et un groupe époxy, en tant que groupe réactif de durcissement.

5. Composition de revêtement selon l'une quelconque des revendications 1 à 4, dans laquelle le monomère (D) a un groupe choisi parmi un groupe hydrocarboné saturé aliphatique ayant 1 à 20 carbones, un groupe hydrocarboné saturé alicyclique ayant 1 à 20 carbones, et un groupe alkylène glycol dans lequel un groupe alkylène a 1 à 20 carbones et le nombre d'unités répétitives du groupe alkylène est de 1 à 10.

6. Procédé de production de la composition de revêtement selon l'une quelconque des revendications 1 à 5, comprenant le mélange du copolymère contenant du fluor avec l'agent de durcissement.

7. Article revêtu comprenant : un substrat ; et un film durci de la composition de revêtement selon l'une quelconque des revendications 1 à 5 formé sur le substrat.

8. Article revêtu selon la revendication 7, dans lequel une épaisseur de film du film durci est de 0,5 à 1000 µm.

9. Procédé de formation d'un film durci, comprenant :
l'application de la composition de revêtement selon l'une quelconque des revendications 1 à 5 à un substrat pour former un film de revêtement ; et
le durcissement du film de revêtement pour former un film durci.

10. Procédé de formation d'un film durci selon la revendication 9, dans lequel le film de revêtement est durci à une température comprise entre 30 et 250°C.
